# EUROPÄISCHE PATENTSCHRIFT

(11) **EP 0 863 702 B1**
(45) Veröffentlichungstag und Bekanntmachung des Hinweises auf die Patenterteilung: **16.08.2001**
(21) Anmeldenummer: 96939086.3
(22) Anmeldetag: 18.11.1996
(51) Int. Cl.: A01N 37/24

(54) **FUNGIZIDE MISCHUNG**
FUNGICIDAL MIXTURE
MELANGE FONGICIDE

(30) Priorität: 24.11.1995 DE 19543746
(43) Veröffentlichungstag der Anmeldung: 16.09.1998
(73) Patentinhaber: BASF AKTIENGESELLSCHAFT, 67056 Ludwigshafen (DE)
(72) Erfinder: WAGNER, Oliver, D-67061 Ludwigshafen (DE); AMMERMANN, Eberhard, D-64646 Heppenheim (DE); LORENZ, Gisela, D-67434 Hambach (DE); STRATHMANN, Siegfried, D-67117 Limburgerhof (DE)
(86) Internationale Anmeldenummer: EP9605064
(87) Internationale Veröffentlichungsnummer: WO9719595

(56) Entgegenhaltungen:
- WO-A-95/15083
- WO-A-96/03047
- WO-A-96/24249
- DE-A- 4 313 867
- DE-A- 4 437 048

## Beschreibung

Die vorliegende Erfindung betrifft eine fungizide Mischung, enthaltend
a) ein p-Hydroxyanilinderivat der Formel I 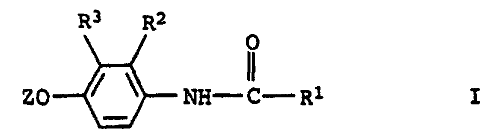 in der die Reste die folgende Bedeutung haben:
   - R¹: Wasserstoff, C₁-C₈-Alkyl, welches partiell oder vollständig halogeniert sein und/oder eine oder zwei der folgenden Gruppen tragen kann: C₁-C₄-Alkoxy, C₁-C₄-Halogenalkoxy, C₁-C₄-Alkylthio, C₃-C₇-Cycloalkyl, C₅-C₇-Cycloalkenyl, wobei die cyclischen Gruppen ihrerseits ein bis drei Halogenatome, C₁-C₃-Alkylgruppen und/oder C₁-C₃-Alkoxygruppen tragen können und Aryl, welches partiell oder vollständig halogeniert sein und/oder einen bis drei der folgenden Substituenten tragen kann: Nitro, Cyano, C₁-C₄-Alkyl, C₁-C₄-Halogen-alkyl, C₁-C₄-Alkoxy, C₁-C₄-Halogenalkoxy und C₁-C₄-Alkylthio;
   C₃-C₆-Cycloalkyl oder C₃-C₆-Cycloalkenyl, wobei diese Reste partiell oder vollständig halogeniert sein und/oder eine bis fünf der folgenden Gruppen tragen können: C₁-C₄-Alkyl, C₁-C₄-Halogenalkyl, C₁-C₄-Alkoxy, C₁-C₄-Halogenalkoxy und Aryl, welches partiell oder vollständig halogeniert sein und/oder einen bis drei der folgenden Substituenten tragen kann: Nitro, Cyano, C₁-C₄-Alkyl, C₁-C₄-Halogenalkyl, C₁-C₄-Alkoxy, C₁-C₄-Halogenalkoxy und C₁-C₄-Alkylthio;
   C₆-C₁₅-Bicycloalkyl oder C₇-C₁₅-Bicycloalkenyl, wobei diese Reste partiell oder vollständig halogeniert sein und/oder eine bis fünf der folgenden Gruppen tragen können: C₁-C₄-Alkyl, C₁-C₄-Halogenalkyl, C₁-C₄-Alkoxy, C₁-C₄-Halogenalkoxy und Aryl, welches partiell oder vollständig halogeniert sein und/oder einen bis drei der folgenden Substituenten tragen kann: Nitro, Cyano, C₁-C₄-Alkyl, C₁-C₄-Halogenalkyl, C₁-C₄-Alkoxy, C₁-C₄-Halogenalkoxy und C₁-C₄-Alkylthio;
   - R² und R³: unabhängig voneinander Halogen, C₁-C₄-Alkyl, C₁-C₄-Halogenalkyl, C₁-C₄-Alkoxy oder C₁-C₄-Halogenalkoxy;
   - z: H oder R⁴-(CO)-, wobei
   R⁴ C₁-C₆-Alkyl oder C₂-C₆-Alkenyl, wobei diese Gruppen partiell oder vollständig halogeniert sein und/oder einen der folgenden Reste tragen können: C₁-C₄-Alkoxy, C₁-C₄-Halogenalkoxy, C₁-C₄-Alkylthio, C₃-C₇-Cycloalkyl, C₅-C₇-Cycloalkenyl oder Aryl, wobei die aromatischen Reste ihrerseits eine bis drei der folgenden Gruppen tragen können: Nitro, Cyano, Halogen, C₁-C₄-Alkyl, C₁-C₄-Halogenalkyl, C₁-C₄-Alkoxy, C₁-C₄-Halogenalkoxy und C₁-C₄-Alkylthio;
   C₃-C₇-Cycloalkyl oder C₅-C₇-Cycloalkenyl, wobei diese Gruppen ein bis drei der folgenden Reste tragen können: Halogen, C₁-C₄-Alkyl, C₁-C₄-Halogenalkyl und C₁-C₄-Alkoxy;
   Aryl, welches partiell oder vollständig halogeniert sein und/oder ein bis drei der folgenden Reste tragen kann: Nitro, Cyano, C₁-C₄-Alkyl, C₁-C₄-Halogenalkyl, C₁-C₄-Alkoxy, C₁-C₄-Halogenalkoxy und C₁-C₄-Alkylthio;
   OR⁵ oder NR⁶R⁷, wobei
   R⁵ C₁-C₆-Alkyl oder C₂-C₆-Alkenyl bedeutet, wobei diese Gruppen partiell oder vollständig halogeniert sein und/oder einen der folgenden Reste tragen können: C₁-C₄-Alkoxy, C₁-C₄-Halogenalkoxy, C₁-C₄-Alkylthio, C₃-C₇-Cycloalkyl, C₅-C₇-Cycloalkenyl oder Aryl, wobei die aromatischen Reste ihrerseits eine bis drei der folgenden Gruppen tragen können: Nitro, Cyano, Halogen, C₁-C₄-Alkyl, C₁-C₄-Halogenalkyl, C₁-C₄-Alkoxy, C₁-C₄-Halogenalkoxy und C₁-C₄-Alkylthio;
   C₃-C₇-Cycloalkyl oder C₅-C₇-Cyencloalkenyl bedeutet, wobei diese Gruppen einen bis drei der folgenden Reste tragen können: Halogen, C₁-C₄-Alkyl, C₁-C₄-Halogenalkyl und C₁-C₄-Alkoxy;
   Aryl, welches partiell oder vollständig halogeniert sein und/oder einen bis drei der folgenden Reste tragen kann: Nitro, Cyano, C₁-C₄-Alkyl, C₁-C₄-Halogenalkyl, C₁-C₄-Alkoxy, C₁-C₄-Halogenalkoxy und C₁-C₄-Alkylthio;
   R⁶ C₁-C₆-Alkyl oder C₂-C₆-Alkenyl, wobei diese Gruppen partiell oder vollständig halogeniert sein und/oder einen der folgenden Reste tragen können: C₁-C₄-Alkylthio C₃-C₇-Cycloalkyl, C₅-C₇-Cycloalkenyl oder Aryl, wobei die aromatischen Reste ihrerseits eine bis drei der folgenden Gruppen tragen können: Nitro, Cyano, Halogen, C₁-C₄-Alkyl, C₁-C₄-Halogenalkyl, C₁-C₄-Alkoxy, C₁-C₄-Halogenalkoxy und C₁-C₄-Alkylthio;
   C₃-C₇-Cycloalkyl oder C₅-C₇-Cycloalkenyl bedeutet, wobei diese Gruppen ein bis drei der folgenden Reste tragen können: Halogen, C₁-C₄-Alkyl, C₁-C₄-Halogenalkyl und C₁-C₄-Alkoxy;
   Aryl, welches partiell oder vollständig halogeniert sein und/oder einen bis drei der folgenden Reste tragen kann: Nitro, Cyano, C₁-C₄-Alkyl, C₁-C₄-Halogenalkyl, C₁-C₄-Alkoxy, C₁-C₄-Halogenalkoxy und C₁-C₄-Alkylthio; und
   R⁷ Wasserstoff oder C₁-C₆-Alkyl,
   und
b) einen Wirkstoff der Formel IIA oder IIB 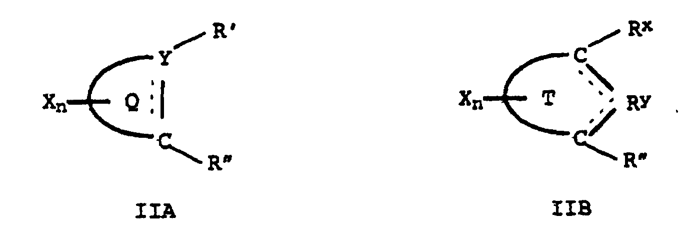 in denen .... für eine Doppel- oder Einfachbindung steht und der Index und die Substituenten die folgende Bedeutung haben:
   - R': -C[CO₂CH₃]=CHOCH₃, -C[CO₂CH₃]=NOCH₃, -C[COMHCH₃]=NOCH₃, -C[CO₂CH₃]=CHCH₃, -C[CO₂CH₃]=CHCH₂CH₃, -C[COCH₃]NOCH₃, -C[COCH₂CH₃]=NOCH₃, -N(OCH₃)-CO₂CH₃, -N(CH₃)-CO₂CH₃, -N(CH₂CH₃)-CO₂CH₃;
   - R": ein C-organischer Rest, welcher direkt oder über eine Oxy-, Mercapto-, Amino-, oder Alkylaminogruppe gebunden ist;
   zusammen mit einer Gruppe X und dem Ring Q bzw. T, an den sie gebunden sind, ein ggf. subst. bicyclisches, partiell oder vollständig ungesättigtes System, welches neben Kohlenstoffringgliedern Heteroatome aus der Gruppe Sauerstoff, Schwefel und Stickstoff enthalten kann;
   - R^{x}: -OC[CO₂CH₃]=CHOCH₃, -OC[CO₂CH₃]=CHCH₃, -OC[CO₂CH₃]=CHCH₂CH₃, -SC[CO₂CH₃]=CHOCH₃, -SC[CO₂CH₃]=CHCH₃, -SC[CO₂CH₃]=CHCH₂CH₃, -N(CH₃)C[CO₂CH₃]=CHOCH₃, -N(CH₃)C(CO₂CH₃]=NOCH₃, -CH₂C[CO₂CH₃]=CHOCH₃, -CH₂C[CO₂CH₃]=NOCH₃. -CH₂C[CONHCH₃]=NOCH₃;
   - R^{y}: Sauerstoff, Schwefel, =CH- oder =N-;
   - n: 0, 1, 2 oder 3, wobei die Reste X verschieden sein können, wenn n > 1 ist;
   - X: Cyano, Nitro, Halogen, C₁-C₄-Alkyl, C₁-C₄-Halogenalkyl, C₁-C₄-Alkoxy, C₁-C₄-Halogenalkoxy, C₁-C₄-Alkylthio;
   für den Fall, daß n > 1 ist, eine an zwei benachbarte C-Atome des Phenylrings gebundene C₃-C₅-Alkylen-, C₃-C₅-Alkenylen-, Oxy-C₂-C₄-alkylen-, Oxy-C₁-C₃-alkylenoxy-, Oxy-C₂-C₄-alkenylen-, Oxy-C₂-C₄-alkenylenoxy- oder Butadiendiylgruppe, wobei diese Ketten ihrerseits ein bis drei der folgenden Reste tragen können: Halogen, C₁-C₄-Alkyl, C₁-C₄-Halogenalkyl, C₁-C₄-Alkoxy, C₁-C₄-Halogenalkoxy oder C₁-C₄-Alkylthio;
   - Y: =C- oder -N-;
   - Q: Phenyl, Pyrrolyl, Thienyl, Furyl, Pyrazolyl, Imidazolyl, Oxazolyl, Isoxazolyl, Thiazolyl, Thiadiazolyl, Triazolyl, Pyridinyl, 2-Pyridinyl, Pyrimidinyl und Triazinyl;
   - T: Phenyl, Oxazolyl, Thiazolyl, Thiadiazolyl, Oxadiazolyl, Pyridinyl, Pyrimidinyl und Triazinyl,
in einer synergistisch wirksamen Menge.

Verbindungen der Formel I sind bekannt aus EP-A 339 418, EP-A 653 417, EP-A 653 418 und den deutschen Patentanmeldungen Az. 195 04 599.8 und 195 40 970.1.

Vorzugsweise kommen für die erfindungsgemäßen Mischungen die Verbindungen der Formel I gemäß Tabelle I.1 in Betracht.

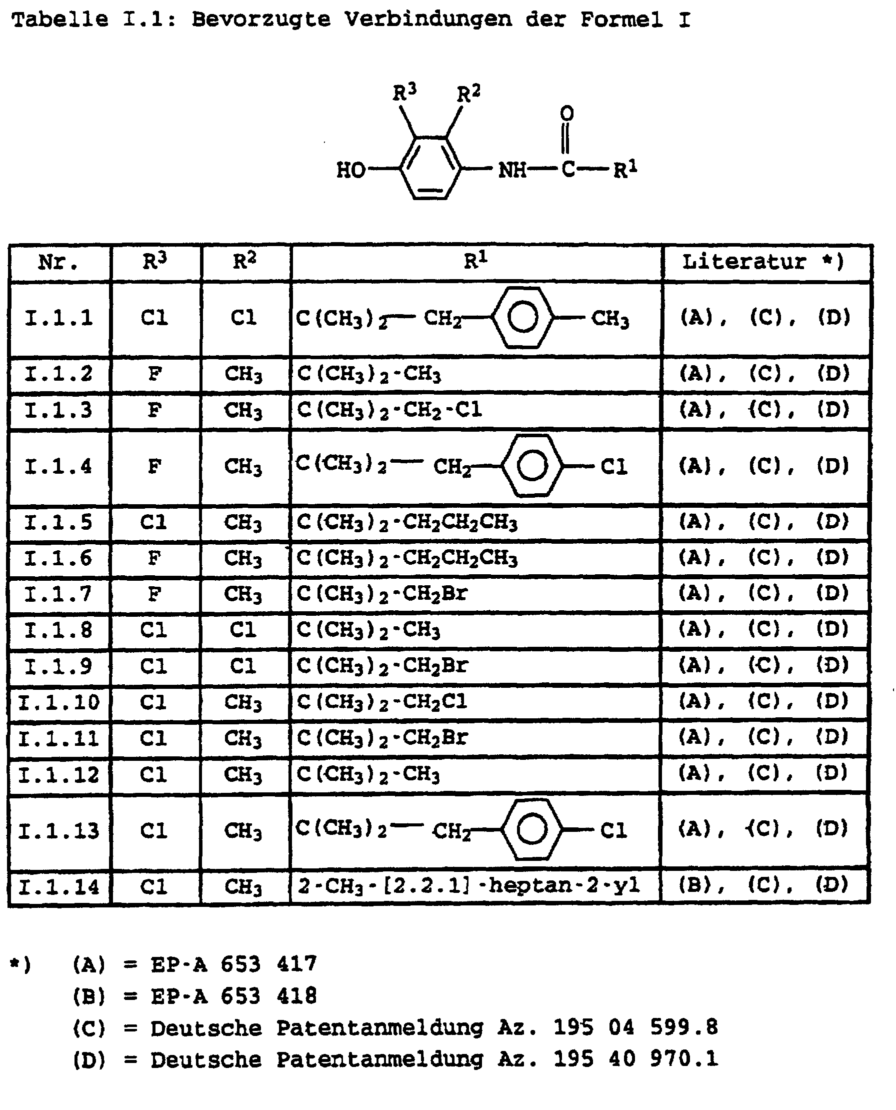

Besonders bevorzugt sind Verbindungen der Formel I gemäß Tabelle I.2.

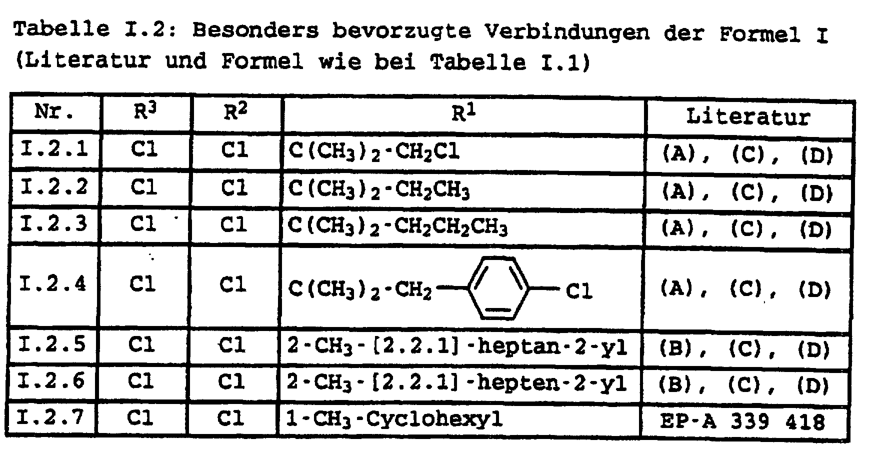

Die Wirkstoffe IIA und IIB sind beispielsweise in den folgenden Schriften beschrieben: EP-A 178 826, EP-A 203 606, EP-A 203 608, EP-A 206 523, EP-A 212 859, EP-A 226 917,
EP-A 229 974, EP-A 242 070, EP-A 242 081, EP-A 243 012, EP-A 243 014, EP-A 251 082, EP-A 253 213, EP-A 254 426, EP-A 256 667, EP-A 260 794, EP-A 260 832, EP-A 267 734, EP-A 273 572, EP-A 274 825, EP-A 278 595, EP-A 280 185, EP-A 291 196, EP-A 299 694, EP-A 307 101, EP-A 307 103, EP-A 310 954, EP-A 312 221, EP-A 312 243, EP-A 329 011, EP-A 331 966, EP-A 335 519, EP-A 336 211, EP-A 337 211, EP-A 341 845, EP-A 350 691, EP-A 354 571, EP-A 363 818, EP-A 370 629, EP-A 373 775, EP-A 374 811, EP-A 378 308, EP-A 378 755, EP-A 379 098, EP-A 382 375, EP-A 383 117, EP-A 384 211, EP-A 385 224, EP-A 385 357, EP-A 386 561, EP-A 386 681, EP-A 389 901, EP-A 391 451, EP-A 393 428, EP-A 393 861, EP-A 398 692, EP-A 400 417, EP-A 402 246, EP-A 405 782, EP-A 407 873, EP-A 409 369, EP-A 414 153, EP-A 416 746, EP-A 420 091, EP-A 422 597, EP-A 426 460, EP-A 429 968, EP-A 430 471, EP-A 433 233, EP-A 433 899, EP-A 439 785, EP-A 459 285, EP-A 460 575, EP-A 463 488, EP-A 463 513, EP-A 464 381, EP-A 468 684, EP-A 468 695, EP-A 468 775, EP-A 471 261, EP-A 472 224, EP-A 472 300, EP-A 474 042, EP-A 475 158, EP-A 477 631, EP-A 480 795, EP-A 483 851, EP-A 483 985, EP-A 487 409, EP-A 493 711, EP-A 498 188, EP-A 498 396, EP-A 499 823, EP-A 503 436, EP-A 508 901, EP-A 509 857, EP-A 513 580, EP-A 515 901, EP-A 517 301, EP-A 528 245, EP-A 532 022, EP-A 532 126, EP-A 532 127, EP-A 535 980, EP-A 538 097, EP-A 544 587, EP-A 546 387, EP-A 548 650, EP-A 564 928, EP-A 566 455, EP-A 567 828, EP-A 571 326, EP-A 579 071, EP-A 579 124, EP-A 579 908, EP-A 581 095, EP-A 582 902, EP-A 582 925, EP-A 583 806, EP-A 584 625, EP-A 585 751, EP-A 590 610, EP-A 596 254, WO-A 90/07,493, WO-A 92/13,830, WO-A 92/18,487, WO-A 92/18,494, WO-A 92/21,653, WO-A 93/07,116, WO-A 93/08,180, WO-A 93/08,183, WO-A 93/15,046, WO-A 93/16,986, WO-A 94/00,436, WO-A 94/05,626, WO-A 94/08,948, WO-A 94/08,968, WO-A 94/10,159, WO-A 94/11,334, JP-A 02/121,970, JP-A 04/182,461, JP-A 05/201,946, JP-A 05/201,980, JP-A 05/255,012, JP-A 05/294,948, JP-A 06/025,133, JP-A 06/025,142, JP-A 06/056,756, FR-A 2 670 781, GB-A 2 210 041, GB-A 2 218 702, GB-A 2 238 308, GB-A 2 249 092, GB-A 2 253 624, GB-A 2 255 092, DE-A 39 05 911, DE Pat. Anm. 43 05 502.8, DE Pat. Anm. 43 10 143.7, DE Pat. Anm. 43 18 397.2, DE Pat. Anm. 43 34 709.6, DE Pat. Anm. 44 03 446.6, DE Pat. Anm. 44 03 447.4, DE Pat. Anm. 44 03 448.2, DE Pat. Anm. 44 10 424.3, DE Pat. Anm. 44 21 180.5, DE Pat. Anm. 44 21 182.1, DE Pat. Anm. 44 15 483.6, DE Pat. Anm. 44 23 615.8 und DE Pat. Anm. 44 23 612.3.

In den nachveröffentlichten Schriften WO-A 96/24,249 und EP-A 707 792 werden fungizide Mischungen von Verbindungen der Formel I mit anderen Fungiziden, bzw. eines Hydroxyanilinderivates der Formel I mit zwei Methoxyiminophenylacetamidderivaten der Formel IIA beschrieben.

Der vorliegenden Erfindung lag die Aufgabe zugrunde, die fungizide Wirkung der Verbindungen I durch Mischen mit geeigneten anderen Fungiziden zu steigern.

Demgemäß wurde gefunden, daß sich Schadpilze grundsätzlich besser bekämpfen lassen, wenn man neben einem Wirkstoff I einen weiteren Wirkstoff der Formel IIA oder der Formel IIB anwendet.

Durch die erfindungsgemäße Kombination der Wirkstoffe I und IIA bzw. IIB wird eine effektivere Bekämpfung des Schadpilzes erreicht, da geringere Aufwandmengen an den Einzelwirkstoffen erforderlich sind (Synergismus).

Für die erfindungsgemäßen Mischungen eignen sich alle in den eingangs angeführten Schriften angeführten Verbindungen des Typs IIA bzw. IIB.

Von besonderer Bedeutung sind dabei Verbindungen IIA und IIB, in denen R" für eine der folgenden Gruppen steht:
ggf. subst. Aryloxy, ggf. subst. Hetaryloxy, ggf. subst. Aryloxymethylen, ggf. subst. Hetaryloxymethylen, ggf. subst. Arylethenylen, ggf. subst. Hetarylethenylen, oder eine Gruppe
   RαRβC=NOCH₂- oder RγON=CRδRε=NOCH₂ wobei die Reste Rα, Rβ Rγ, Rδ und Rε im allgemeinen und im besonderen die in den folgenden Schriften beschriebenen Bedeutungen haben: EP-A 370 629, EP-A 414 153, EP-A 426 460, EP-A 460 575, EP-A 463 488, EP-A 472 300, EP-A 498 188, EP-A 498 396, EP-A 515 901, EP-A 585 751, WO-A 90/07,493, WO-A 92/13,830, WO-A 92/18,487, WO-A 92/18,494, WO-A 93/15,046, WO-A 93/16,986, WO-A 94/08,948, WO-A 94/08,968, JP-A 05/201,946, JP-A 05/255,012, JP-A 05/294,948, JP-A 06/025,133, JP-A 06/025,142, DE Pat. Anm. 44 03 447.., DE Pat. Anm. 44 03 448.., DE Pat. Anm. 44 21 180.5 und DE Pat. Anm. 44 21 182.1;
besonders bevorzugte Reste "ggf. subst. Aryloxy, ggf. subst. Hetaryloxy" entsprechen im allgemeinen und im besonderen den in den folgenden Schriften beschriebenen Bedeutungen: EP-A 178 826, EP-A 242 070, EP-A 242 081, EP-A 253 213, EP-A 254 426, EP-A 256 667, EP-A 260 794, EP-A 280 185, EP-A 307 103, EP-A 341 845, EP-A 382 375, EP-A 393 861, EP-A 398 692, EP-A 405 782, EP-A 430 471, EP-A 468 684, EP-A 468 695, EP-A 477 631, EP-A 483 985, EP-A 498 188, EP-A 513 580, EP-A 515 901, WO-A 93/15,046, WO-A 94/10,159, GB-A 2 253 624, JP-A 04/182,461 und DE Pat. Anm. 44 23 612.3;
besonders bevorzugte Reste "ggf. subst. Aryloxymethylen, ggf. subst. Hetaryloxymethylen" entsprechen im allgemeinen und im besonderen den in den folgenden Schriften beschriebenen Bedeutungen: EP-A 178 826, EP-A 226 917, EP-A 253 213, EP-A 254 426, EP-A 278 595, EP-A 280 185, EP-A 299 694, EP-A 335 519, EP-A 350 691, EP-A 363 818, EP-A 373 775, EP-A 378 308, EP-A 385 224, EP-A 386 561, EP-A 398 692, EP-A 400 417, EP-A 407 873, EP-A 472 224, EP-A 477 631, EP-A 498 188, EP-A 498 396, EP-A 513 580, EP-A 515 901, EP-A 579 124, WO-A 93/08,180, WO-A 93/15,046, WO-A 94/00,436, JP-A 04/182,461, DE Anm. Nr. 43 05 502.., DE Anm. Nr. 44 10 424.. und DE Pat. Anm. 44 15 483.6;
besonders bevorzugte Reste "ggf. subst. Arylethenylen, ggf. subst. Hetarylethenylen" entsprechen im allgemeinen und im besonderen den in den folgenden Schriften beschriebenen Bedeutungen: EP-A 178 826, EP-A 203 606, EP-A 253 213, EP-A 254 426, EP-A 280 185, EP-A 378 755, EP-A 398 692, EP-A 402 246, EP-A 474 042, EP-A 475 158, EP-A 477 631, EP-A 487 409, EP-A 498 188, EP-A 498 396, EP-A 513 580, EP-A 515 901, EP-A 528 245, EP-A 544 587, WO-A 93/15,046, WO-A 94/11,334, FR-A 2 670 781 und DE Pat. Anm. 44 23 615.8;
Besonders bevorzugte Wirkstoffe der Formel IIA, in denen R' für -C[CO₂CH₃]=CHOCH₃ steht, entsprechen im allgemeinen und im besonderen den in den folgenden Schriften beschriebenen Verbindungen: EP-A 178 826, EP-A 203 606, EP-A 226 917, EP-A 242 070, EP-A 242 081, EP-A 256 667, EP-A 260 794, EP-A 278 595, EP-A 299 694, EP-A 307 103, EP-A 335 519, EP-A 341 845, EP-A 350 691, EP-A 370 629, EP-A 373 775, EP-A 378 308, EP-A 378 755, EP-A 382 375, EP-A 385 224, EP-A 386 561, 5 EP-A 393 861, EP-A 402 246, EP-A 405 782, EP-A 407 873, EP-A 414 153, EP-A 426 460, EP-A 430 471, EP-A 463 488, EP-A 468 695, EP-A 472 224, EP-A 474 042, EP-A 475 158, EP-A 483 985, EP-A 487 409, EP-A 515 901, EP-A 528 245, EP-A 544 587, WO-A 90/07,493, WO-A 92/18,487, WO-A 92/18,494, WO-A 93/08,180, WO-A 93/16,986, WO-A 94/00,463, WO-A 94/08,948, WO-A 94/08,968, WO-A 94/10,159, WO-A 94/11,334, FR-A 2 670 781, JP-A 06/025,133, DE Anm. Nr. 44 03 447.., DE Anm. Nr. 44 10 424.. und DE Pat. Anm. 44 21 180.5;
besonders bevorzugte Wirkstoffe des Typs II, in denen R' für -C[CO₂CH₃]=NOCH₃ steht, entsprechen im allgemeinen und im besonderen den in den folgenden Schriften beschriebenen Verbindungen: EP-A 253 213, EP-A 254 426, EP-A 299 694, EP-A 363 818, EP-A 378 308, EP-A 385 224, EP-A 386 561, EP-A 400 417, EP-A 407 873, EP-A 460 575, EP-A 463 488, EP-A 468 684, EP-A 472 300, EP-A 515 901, WO-A 94/00,436, WO-A 94/08,948, WO-A 94/10,159, WO-A 94/11,334, JP-A 05/201,946, JP-A 05/255,012, JP-A 05/294,948, DE Anm. Nr. 44 03 447.., DE Anm. Nr. 44 10 424.. und DE Pat. Anm. 44 21 180.5;
besonders bevorzugte Wirkstoffe des Typs II, in denen R' für -C[CONHCH₃]=NOCH₃ steht, entsprechen im allgemeinen und im besonderen den in den folgenden Schriften beschriebenen Verbindungen: EP-A 398 692, EP-A 463 488, EP-A 477 631, EP-A 515 901, EP-A 579 124, EP-A 585 751, WO-A 92/13,830, WO-A 93/08,180, WO-A 94/08,948, WO-A 94/10,159, WO-A 94/11,334, GB-A 2 253 624, JP-A 04/182,461, JP-A 05/201,946, JP-A 05/255,012, JP-A 05/294,948, DE Anm. Nr. 43 05 502.., DE Anm. Nr. 44 03 448.., DE Anm. Nr. 44 10 424.., DE Pat. Anm. Nr. 44 23 615.8 und DE Pat. Anm. 44 21 182.1;
besonders bevorzugte Wirkstoffe des Typs II, in denen R' für -C[CO₂CH₃]=CHCH₃ oder -C[CO₂CH₃]=CHCH₂CH₃ steht, entsprechen im allgemeinen und im besonderen den in den folgenden Schriften beschriebenen Verbindungen: EP-A 280 185, EP-A 463 488, EP-A 501 901, EP-A 513 580, EP-A 515 901, DE Anm. Nr. 44 03 447.., DE Anm. Nr. 44 10 424.., DE Pat. Anm. Nr. 44 21 180.5 und DE Pat. Anm. Nr. 44 15 483.6; besonders bevorzugte Wirkstoffe des Typs II, in denen R' für -C[COCH₃]=NOCH₃ oder -C[COCH₂CH₃]=NOCH₃ steht, entsprechen im allgemeinen und im besonderen den in der EP-A 498 188 beschriebenen Verbindungen;
besonders bevorzugte Wirkstoffe des Typs II, in denen R' für -N(OCH₃)CO₂CH₃, -N(CH₃)-CO₂CH₃ oder -N(CH₂CH₃)-CO₂CH₃ steht, entsprechen im allgemeinen und im besonderen den in den folgenden Schriften beschriebenen Verbindungen: EP-A 498 396, WO-A 93/15,046, JP-A 06/025,142 und DE Pat. Anm. 44 23 612.3;
Besonders bevorzugte Wirkstoffe des Typs II, in denen R' für -OC[CO₂CH₃]=CHOCH₃, -OC[CO₂CH₃]=CHCH₃, -OC[CO₂CH₃]=CHCH₂CH₃, -OC[COCH₂CH₃]=NOCH₃, -SC[CO₂CH₃]=CHOCH₃, -SC[CO₂CH₃]=CHCH₃, -SC[CO₂CH₃]=CHCH₂CH₃, -N(CH₃)C[CO₂CH₃]=CHOCH₃, -N(CH₃)C[CO₂CH₃]=NOCH₃, -CH₂C[CO₂CH₃]=CHOCH₃, -CH₂C[CO₂CH₃]=NOCH₃ oder -CH₂C[CONHCH₃]=NOCH₃ steht, entsprechen im allgemeinen und im besonderen den in den folgenden Schriften beschriebenen Verbindungen: EP-A 212 859, EP-A 331 966, EP-A 383 117, EP-A 384 211, EP-A 389 901, EP-A 409 369, EP-A 464 381, EP-A 471 261, EP-A 503 436, EP-A 546 387, EP-A 548 650, EP-A 579 908 und EP-A 584 625.

Beispiele für insbesondere geeignete Wirkstoffe des Typs II sind in den folgenden Tabellen zusammengestellt.

**Tabelle II.1A**

| | | |
|---|---|---|
| Verbindungen der Formel IIA, in denen Q Phenyl bedeutet, R' für -C(CO₂CH₃)=CHOCH₃ steht, n den Wert 0 hat, R" für ggf. subst. (Het)aryl-oxymethylen steht, wobei die ggf. subst. (Het)arylgruppe die folgende Bedeutung hat | | |

| **Nr.** | **ggf. subst. (Het)aryl** | **Literatur** |
|---|---|---|
| II.1A-1 | 2-CH₃-C₆H₄ | EP-A 226 917 |
| II.1A-2 | 2,S-(CH₃)₂-C₆H₃ | EP-A 226 917 |
| II.1A-3 | 2-CH₃, 4-C[CH₃]=NOCH₃-C₆H₃ | EP-A 386 561 |
| II.1A-4 | 2-CH₂CH₂CH₃, 6-CF₃-pyrimidin-4-yl | EP-A 407 873 |
| II.1A-5 | 2,4-(CH₃)₂-C₆H₃ | EP-A 226 917 |

**Tabelle II.1B**

| | | |
|---|---|---|
| Verbindungen der Formel IIA, in denen R' für -C(CO₂CH₃)=CHOCH₃ steht, Q Phenyl bedeutet, n den Wert 0 hat, R" für ggf. subst. (Het)aryl-oxy steht, wobei die ggf. subst. (Het)arylgruppe die folgende Bedeutung hat | | |

| **Nr.** | **ggf. subst. (Het)aryl** | **Literatur** |
|---|---|---|
| II.1B-1 | C₆H₅ | EP-A 178 826 |
| II.1B-2 | 6-[2-CN-C₆H₄-O]-pyrimidin-4-yl | EP-A 382 375 |

**Tabelle II.1C**

| | | |
|---|---|---|
| Verbindungen der Formel IIA, in denen R' für -C(CO₂CH₃)=CHOCH₃ steht, Q Phenyl bedeutet, n den Wert 0 hat, R" für ggf. subst. (Het)aryl-ethenylen steht, wobei die ggf. subst. (Het)arylgruppe die folgende Bedeutung hat | | |

| **Nr.** | **ggf. subst. (Het)aryl** | **Literatur** |
|---|---|---|
| II.1C-1 | 1-(2,4-Cl₂-C₆H₃), 5-CF₃-pyrazol-4-yl | EP-A 528 245 |
| II.1C-2 | 1-(4-Cl-C₆H₄)-pyrazol-4-yl | EP-A 378 755 |
| II.1C-3 | 3-CF₃-C₆H₄ | EP-A 203 606 |
| II.1C-4 | 3-Cl-C₆H₄ | EP-A 203 606 |
| II.1C-5 | 4-C₆H₅-C₆H₄ | EP-A 203 606 |

**Tabelle II.1D**

| | | | |
|---|---|---|---|
| Verbindungen der Formel IIA, in denen Q Phenyl bedeutet, R' für -C(CO₂CH₃)=CHOCH₃ steht, n den wert 0 hat, R" für CH₂ON=CR^{α}R^{β} steht, wobei R^{α} und R^{β} die folgende Bedeutung haben | | | |

| **Nr.** | **R**^{**α**} | **R**^{**β**} | **Literatur** |
|---|---|---|---|
| II.1D-1 | CH₃ | 4-Cl-C₆H₄ | EP-A 370 629 |
| II.1D-2 | CH₃ | 3-CF₃-C₆H₄ | EP-A 370 629 |
| II.1D-3 | CH₃ | 4-OCH₂CH₃-pyrimidin-2-yl | WO-A 92/18,487 |

**Tabelle II.1E**

| | | | | |
|---|---|---|---|---|
| Verbindungen der Formel IIA, in denen Q Phenyl bedeutet, R' für -C(CO₂CH₃)=CHOCH₃ steht, n den Wert 0 hat, R" für CH₂ON=CR^{γ}CR^{δ}=NOR^{ε} steht, wobei R^{γ}, R^{δ} und R^{ε} die folgende Bedeutung haben | | | | |

| **Nr.** | **R**^{**γ**} | **R**^{**δ**} | **R**^{**ε**} | **Literatur** |
|---|---|---|---|---|
| II.1E-1 | CH₃ | CH₃ | CH₃ | DE Anm. Nr. 44 03 447.4 |
| II.1E-2 | CH₃ | CH₃ | CH₂CH₃ | DE Anm. Nr. 44 03 447.4 |
| II.1E-3 | CH₃ | C₆H₅ | CH₃ | DE Anm. Nr. 44 03 447.4 |
| II.1E-4 | CH₃ | C₆H₅ | CH₂CH₃ | DE Anm. Nr. 44 03 447.4 |
| II.1E-5 | CH₃ | 4-Cl-C₆H₄ | CH₃ | DE Anm. Nr. 44 21 180.5 |
| II.1E-6 | CH₃ | 4-Cl-C₆H₄ | CH₂CH₃ | DE Anm. Nr. 44 21 180.5 |

**Tabelle II.2A**

| | | |
|---|---|---|
| Verbindungen der Formel IIA, in denen Q Phenyl bedeutet, R' für -C(CO₂CH₃)=NOCH₃ steht, n den Wert 0 hat, R" für ggf. subst. (Het)aryl-oxymethylen steht, wobei die ggf. subst. (Het)arylgruppe die folgende Bedeutung hat | | |

| **Nr.** | **ggf. subst. (Het)aryl** | |
|---|---|---|
| II.2A-1 | 2-CH₃-C₆H₄ | **Literatur** EP-A 253 213 |
| II.2A-2 | 2,5-(CH₃)₂-C₆H₃ | EP-A 400 417 |
| II.2A-3 | 2,4-(CH₃)₂-C₆H₃ | EP-A 400 417 |
| II.2A-4 | 2,3,5-(CH₃)₃-C₆H₂ | EP-A 400 417 |
| II.2A-5 | 2-Cl, 5-CH₃-C₆H₃ | EP-A 400 417 |
| II.2A-6 | 2-CH₃, 4-C[CH₃]=NOCH₃-C₆H₃ | EP-A 386 561 |

**Tabelle II.2B**

| | | |
|---|---|---|
| Verbindungen der Formel IIA, in denen Q Phenyl bedeutet, R' für -C(CO₂CH₃)=NOCH₃ steht, n den Wert 0 hat, R" für ggf. subst. (Het)aryl-oxy steht, wobei die ggf. subst. (Het)arylgruppe die folgende Bedeutung hat | | |

| **Nr.** | **ggf. subst. (Het)aryl** | **Literatur** |
|---|---|---|
| II.2B-1 | C₆H₅ | EP-A 253 213 |
| II.2B-2 | 6-[2-CN-C₆H₄-O]-pyrimidin-4-yl | EP-A 468 684 |

**Tabelle II.2C**

| | | | |
|---|---|---|---|
| Verbindungen der Formel IIA, in denen Q Phenyl bedeutet, R' für -C(CO₂CH₃)=NOCH₃ steht, n den Wert 0 hat, R" für CH₂ON=CR^{α}R^{β} steht, wobei R^{α} und R^{β} die folgende Bedeutung haben | | | |

| **Nr.** | **R**^{**α**} | **R**^{**β**} | **Literatur** |
|---|---|---|---|
| II.2C-1 | CH₃ | 4-Cl-C₆H₄ | EP-A 463 488 |
| II.2C-2 | CH₃ | 3-Cl-C₆H₄ | EP-A 463 488 |
| II.2C-3 | CH₃ | 4-CF₃-C₆H₄ | EP-A 463 488 |
| II.2C-4 | CH₃ | 3-CF₃-C₆H₄ | EP-A 463 488 |
| II.2C-5 | CH₃ | 4-CH₃-C₆H₄ | EP-A 463 488 |
| II.2C-6 | CH₃ | 4-OCH₂CH₃-pyrimidin-2-yl | EP-A 472 300 |
| II.2C-7 | CH₃ | 3,5-Cl₂-C₆H₃ | EP-A 463 488 |

**Tabelle II.2D**

| | | | | |
|---|---|---|---|---|
| Verbindungen der Formel IIA, in denen Q Phenyl bedeutet, R' für -C(CO₂CH₃)=NOCH₃ steht, n den Wert 0 hat, R" für CH₂ON=CR^{γ}CR^{δ}=NOR^{ε} steht, wobei Rγ, R^{δ} und R^{ε} die folgende Bedeutung haben | | | | |

| **Nr.** | **R**^{**γ**} | **R**^{**δ**} | **R**^{**ε**} | **Literatur** |
|---|---|---|---|---|
| II.2D-1 | CH₃ | CH₃ | CH₃ | DE Anm. Nr. 44 03 447.4 |
| II.2D-2 | CH₃ | CH₃ | CH₂CH₃ | DE Anm. Nr. 44 03 447.4 |
| II.2D-3 | CH₃ | C₆H₅ | CH₃ | DE Anm. Nr. 44 03 447.4 |
| II.2D-4 | CH₃ | C₆H₅ | CH₂CH₃ | DE Anm. Nr. 44 03 447.4 |
| II.2D-5 | CH₃ | 4-Cl-C₆H₄ | CH₃ | DE Anm. Nr. 44 21 180.5 |
| II.2D-6 | CH₃ | 4-Cl-C₆H₄ | CH₂CH₃ | DE Anm. Nr. 44 21 180.5 |

**Tabelle II.3A**

| | | |
|---|---|---|
| Verbindungen der Formel IIA, in denen Q Phenyl bedeutet, R' für -C(CONHCH₃)=NOCH₃ steht, n den Wert 0 hat, R" für ggf. subst. (Het)aryl-oxymethylen steht, wobei die ggf. subst. (Het)arylgruppe die folgende Bedeutung hat | | |

| **Nr.** | **ggf. subst. (Het)aryl** | **Literatur** |
|---|---|---|
| II.3A-1 | 2-CH₃-C₆H₄ | EP-A 477 631 |
| II.3A-2 | 2,5-(CH₃)₂-C₆H₃ | EP-A 477 631 |
| II.3A-3 | 2,4-(CH₃)₂-C₆H₃ | EP-A 477 631 |
| II.3A-4 | 2,3,5-(CH₃)₃-C₆H₂ | EP-A 477 631 |
| II.3A-5 | 2-CH₃, 4-C[CH₃]=NOCH₃-C₆H₃ | EP-A 579 124 |
| II.3A-6 | 1-[4-Cl-C₆H₄]-pyrazol-3-yl | DE Anm. Nr. 43 05 502.8 |
| II.3A-7 | 1-[2,4-Cl₂-C₆H₃]-pyrazol-3-yl | DE Anm. Nr. 43 05 502.8 |

**Tabelle II.3B**

| | | |
|---|---|---|
| Verbindungen der Formel IIA, in denen Q Phenyl bedeutet, R' für -C(CONHCH₃)=NOCH₃ steht, n den Wert 0 hat, R" für ggf. subst. (Het)aryl-oxy steht, wobei die ggf. subst. (Het)arylgruppe die folgende Bedeutung hat | | |

| **Nr.** | **ggf. subst. (Het)aryl** | **Literatur** |
|---|---|---|
| II.3B-1 | C₆H₅ | EP-A 398 692 |
| II.3B-2 | 6-[2-CN-C₆H₄-O]-pyrimidin-4-yl | GB-A 2 253 624 |

**Tabelle II.3C**

| | | |
|---|---|---|
| Verbindungen der Formel IIA, in denen Q Phenyl bedeutet, R' für -C(CONHCH₃)=NOCH₃ steht, n den Wert 0 hat, R" für ggf. subst. (Het)aryl-ethenylen steht, wobei die ggf. subst. (Het)arylgruppe die folgende Bedeutung hat | | |

| **Nr.** | **ggf. subst. (Het)aryl** | **Literatur** |
|---|---|---|
| II.3C-1 | 1-[2,4-Cl₂-C₆H₃], 5-CF₃-pyrazol-4-yl | DE Anm. Nr. 44 23 615.8 |

**Tabelle II.3D**

| | | | |
|---|---|---|---|
| Verbindungen der Formel IIA, in denen Q Phenyl bedeutet, R' für -C(CONHCH₃)=NOCH₃ steht, n den Wert 0 hat, R" für CH₂ON=CR^{α}R^{β} steht, wobei R^{α} und R^{β} die folgende Bedeutung haben | | | |

| **Nr.** | **R**^{**α**} | **R**^{**β**} | **Literatur** |
|---|---|---|---|
| II.3D-1 | CH₃ | 4-Cl-C₆H₄ | EP-A 463 488 |
| II.3D-2 | CH₃ | 3-Cl-C₆H₄ | EP-A 463 488 |
| II.3D-3 | CH₃ | 4-CF₃-C₆H₄ | EP-A 585 751 |
| II.3D-4 | CH₃ | 3-CF₃-C₆H₄ | EP-A 585 751 |
| II.3D-5 | CH₃ | 4-CH₃-C₆H₄ | EP-A 463 488 |
| II.3D-6 | CH₃ | 3,5-Cl₂-C₆H₃ | EP-A 463 488 |
| II.3D-7 | CH₃ | 2-OCH₂CH₃-pyrimidin-2-yl | WO-A 92/13,830 |

**Tabelle II.3E**

| | | | | |
|---|---|---|---|---|
| Verbindungen der Formel IIA, in denen Q Phenyl bedeutet, R' für -C(CONHCH₃)=NOCH₃ steht, n den Wert 0 hat, R" für CH₂ON=CR^{γ}CR^{δ}=NOR^{ε} steht, wobei R^{γ}, R^{δ} und R^{ε} die folgende Bedeutung haben | | | | |

| **Nr.** | **R**^{**γ**} | **R**^{**δ**} | **R**^{**ε**} | **Literatur** |
|---|---|---|---|---|
| II.3E-1 | CH₃ | CH₃ | CH₃ | DE Pat. Anm. 44 21 182.1 |
| II.3E-2 | CH₃ | CH₃ | CH₂CH₃ | DE Pat. Anm. 44 21 182.1 |
| II.3E-3 | CH₃ | C₆H₅ | CH₃ | DE Pat. Anm. 44 21 182.1 |
| II.3E-4 | CH₃ | C₆H₅ | CH₂CH₃ | DE Pat. Anm. 44 21 182.1 |
| II.3E-5 | CH₃ | 4-Cl-C₆H₄ | CH₃ | DE Pat. Anm. 44 21 182.1 |
| II.3E-6 | CH₃ | 4-Cl-C₆H₄ | CH₂CH₃ | DE Pat. Anm. 44 21 182.1 |
| II.3E-7 | CH₃ | 4-F-C₆H₄ | CH₃ | DE Pat. Anm. 44 21 182.1 |

**Tabelle II.4A**

| | | |
|---|---|---|
| Verbindungen der Formel IIA, in denen Q Phenyl bedeutet, R' für -C(CO₂CH₃)=CHCH₃ steht, n den Wert 0 hat, R" für ggf. subst. (Het)aryl-oxymethylen steht, wobei die ggf. subst. (Het)arylgruppe die folgende Bedeutung hat | | |

| **Nr.** | **ggf. subst. (Het)aryl** | **Literatur** |
|---|---|---|
| II.4A-1 | 2-CH₃-C₆H₄ | EP-A 280 185 |
| II.4A-2 | 2,5-(CH₃)₂-C₆H₃ | EP-A 513 580 |
| II.4A-3 | 2,4-(CH₃)₂-C₆H₃ | EP-A 513 580 |
| II.4A-4 | 2,3,5-(CH₃)₃-C₆H₂ | EP-A 513 580 |
| II.4A-5 | 2-Cl, 5-CH₃-C₆H₃ | EP-A 513 580 |
| II.4A-6 | 2-CH₃, 4-C[CH₃]=NOCH₃-C₆H₃ | EP-A 513 580 |
| II.4A-7 | 1-[4-Cl-C₆H₄]-pyrazol-3-yl | DE Pat. Anm. 44 15 483.6 |

**Tabelle II.4B**

| | | |
|---|---|---|
| Verbindungen der Formel IIA, in denen Q Phenyl bedeutet, R' für -C(CO₂CH₃)=CHCH₃ steht, n den Wert 0 hat, R" für ggf. subst. (Het)aryl-oxy steht, wobei die ggf. subst. (Het)arylgruppe die folgende Bedeutung hat | | |

| **Nr.** | **ggf. subst. (Het)aryl** | **Literatur** |
|---|---|---|
| II.4B-1 | C₆H₅ | EP-A 513 580 |

**Tabelle II.4C**

| | | | | |
|---|---|---|---|---|
| Verbindungen der Formel IIA, in denen Q Phenyl bedeutet, R' für -C(CO₂CH₃)=CHCH₃ steht, n den Wert 0 hat, R" für CH₂ON=CR^{γ}CR^{δ}NOR^{ε} steht, wobei R^{γ}, R^{δ} und R^{ε} die folgende Bedeutung haben | | | | |

| **Nr.** | **R**^{**γ**} | **R**^{**δ**} | **R**^{**ε**} | **Literatur** |
|---|---|---|---|---|
| II.4C-1 | CH₃ | CH₃ | CH₃ | DE Pat. Anm. 44 21 180.5 |
| II.4C-2 | CH₃ | CH₃ | CH₂CH₃ | DE Pat. Anm. 44 21 180.5 |
| II.4C-3 | CH₃ | C₆H₅ | CH₃ | DE Pat. Anm. 44 21 180.5 |
| II.4C-4 | CH₃ | C₆H₅ | CH₂CH₃ | DE Pat. Anm. 44 21 180.5 |
| II.4C-5 | CH₃ | 4-Cl-C₆H₄ | CH₃ | DE Pat. Anm. 44 21 180.5 |
| II.4C-6 | CH₃ | 4-Cl-C₆H₄ | CH₂CH₃ | DE Pat. Anm. 44 21 180.5 |

**Tabelle II.5A**

| | | |
|---|---|---|
| Verbindungen der Formel IIA, in denen Q Phenyl bedeutet, R' für -C(CO₂CH₃)=CHCH₂CH₃ steht, n den Wert 0 hat, R" für ggf. subst. (Het)aryl-oxymethylen steht, wobei die ggf. subst. (Het)arylgruppe die folgende Bedeutung hat | | |

| **Nr.** | **ggf. subst. (Het)aryl** | **Literatur** |
|---|---|---|
| II.5A-1 | 2-CH₃-C₆H₄ | EP-A 513 580 |
| II.5A-2 | 2,5-(CH₃)₂-C₆H₃ | EP-A 513 580 |
| II.5A-3 | 2,4-(CH₃)₂-C₆H₃ | EP-A 513 580 |
| II.5A-4 | 2,3,5-(CH₃)₃-C₆H₂ | EP-A 513 580 |
| II.5A-5 | 2-Cl, 5-CH₃-C₆H₃ | EP-A 513 580 |
| II.5A-6 | 2-CH₃, 4-C[CH₃]=NOCH₃-C₆H₃ | EP-A 513 580 |

**Tabelle II.5B**

| | | |
|---|---|---|
| Verbindungen der Formel IIA, in denen Q Phenyl bedeutet, R' für -C(CO₂CR₃)=CHCH₂CH₃ steht, n den Wert 0 hat, R" für ggf. subst. (Het)aryl-oxy steht, wobei die ggf. subst. (Het)arylgruppe die folgende Bedeutung hat | | |

| **Nr.** | **ggf. subst. (Het)aryl** | **Literatur** |
|---|---|---|
| II.5B-1 | C₆H₅ | EP-A 513 580 |

**Tabelle II.5C**

| | | | | |
|---|---|---|---|---|
| Verbindungen der Formel IIA, in denen Q Phenyl bedeutet, R' für -C(CO₂CH₃)=CHCH₂CH₃ steht, n den Wert 0 hat, R" für CH₂ON=CR^{γ}CR^{δ}=NOR^{ε} steht, wobei R^{γ}, R^{δ} und R^{ε} die folgende Bedeutung haben | | | | |

| **Nr.** | **R**^{**γ**} | **R**^{**δ**} | **R**^{**ε**} | **Literatur** |
|---|---|---|---|---|
| II.5C-1 | CH₃ | CH₃ | CH₃ | DE Pat. Anm. 44 21 180.5 |
| II.5C-2 | CH₃ | CH₃ | CH₂CH₃ | DE Pat. Anm. 44 21 180.5 |
| II.5C-3 | CH₃ | C₆H₅ | CH₃ | DE Pat. Anm. 44 21 180.5 |
| II.5C-4 | CH₃ | C₆H₅ | CH₂CH₃ | DE Pat. Anm. 44 21 180.5 |
| II.5C-5 | CH₃ | 4-Cl-C₆H₄ | CH₃ | DE Pat. Anm. 44 21 180.5 |
| II.5C-6 | CH₃ | 4-Cl-C₆H₄ | CH₂CH₃ | DE Pat. Anm. 44 21 180.5 |

**Tabelle II.6A**

| | | |
|---|---|---|
| Verbindungen der Formel IIA, in denen Q Phenyl bedeutet, R' für -C(COCH₃)=NOCH₃ steht, n den Wert 0 hat, R" für ggf. subst. (Het)aryl-oxymethylen steht, wobei die ggf. subst. (Het)arylgruppe die folgende Bedeutung hat | | |

| **Nr.** | **ggf. subst. (Het)aryl** | **Literatur** |
|---|---|---|
| II.6A-1 | 2-CH₃-C₆H₄ | EP-A 498 188 |
| II.6A-2 | 2,5-(CH₃)₂-C₆H₃ | EP-A 498 188 |
| II.6A-3 | 2,4-(CH₃)₂-C₆H₃ | EP-A 498 188 |
| II.6A-4 | 2,3,5-(CH₃)₃-C₆H₂ | EP-A 498 188 |
| II.6A-5 | 2-CH₃, 4-C[CH₃]=NOCH₃-C₆H₃ | EP-A 498 188 |

**Tabelle II.6B**

| | | |
|---|---|---|
| Verbindungen der Formel IIA, in denen Q Phenyl bedeutet, R' für -C(COCH₃)=NOCH₃ steht, n den Wert 0 hat, R" für ggf. subst. (Het)aryl-oxy steht, wobei die ggf. subst. (Het)arylgruppe die folgende Bedeutung hat | | |

| **Nr.** | **ggf. subst. (Het)aryl** | **Literatur** |
|---|---|---|
| II.6B-1 | C₆H₅ | EP-A 498 188 |
| II.6B-2 | 6-[2-CN-C₆H₄-O]-pyrimidin-4-yl | EP-A 498 188 |

**Tabelle II.7A**

| | | |
|---|---|---|
| Verbindungen der Formel IIA, in denen Q Phenyl bedeutet, R' für -C(COCH₂CH₃)=NOCH₃ steht, n den Wert 0 hat, R" für ggf. subst. (Het)aryl-oxymethylen steht, wobei die ggf. subst. (Het)arylgruppe die folgende Bedeutung hat | | |

| **Nr.** | **ggf. subst. (Het)aryl** | **Literatur** |
|---|---|---|
| II.7A-1 | 2-CH₃-C₆H₄ | EP-A 498 188 |
| II.7A-2 | 2,5-(CH₃)₂-C₆H₃ | EP-A 498 188 |
| II.7A-3 | 2,4-(CH₃)₂-C₆H₃ | EP-A 498 188 |
| II.7A-4 | 2,3,5-(CH₃)₃-C₆H₂ | EP-A 498 188 |
| II.7A-5 | 2-CH₃, 4-C[CH₃]=NOCH₃-C₆H₃ | EP-A 498 188 |

**Tabelle II.7B**

| | | |
|---|---|---|
| Verbindungen der Formel IIA, in denen Q Phenyl bedeutet, R' für -C(COCH₂CH₃)=NOCH₃ steht, n den Wert 0 hat, R" für ggf. subst. (Het)aryl-oxy steht, wobei die ggf. subst. (Het)arylgruppe die folgende Bedeutung hat | | |

| **Nr.** | **ggf. subst. (Het)aryl** | **Literatur** |
|---|---|---|
| II.7B-1 | C₆H₅ | EP-A 498 188 |
| II.7B-2 | 6-[2-CN-C₆H₄-O]-pyrimidin-4-yl | EP-A 498 188 |

**Tabelle II.8A**

| | | |
|---|---|---|
| Verbindungen der Formel IIA, in denen Q Phenyl bedeutet, R' für -N(OCH₃)-CO₂CH₃ steht, n den Wert 0 hat, R" für ggf. subst. (Het)aryl-oxymethylen steht, wobei die ggf. subst. (Het)arylgruppe die folgende Bedeutung hat | | |

| **Nr.** | **ggf. subst. (Het)aryl** | **Literatur** |
|---|---|---|
| II.8A-1 | 2-CH₃-C₆H₄ | WO-A 93/15,046 |
| II.8A-2 | 2,5-(CH₃)₂-C₆H₃ | WO-A 93/15,046 |
| II.8A-3 | 2,4-(CH₃)₂-C₆H₃ | WO-A 93/15,046 |
| II.8A-4 | 2,3,5-(CH₃)₃-C₆H₂ | WO-A 93/15,046 |
| II.8A-5 | 2-Cl, 5-CH₃-C₆H₃ | WO-A 93/15,046 |
| II.8A-6 | 2-CH₃, 4-C[CH₃]=NOCH₃-C₆H₃ | WO-A 93/15,046 |
| II.8A-7 | 2-CH₃, 4-C[CH₃]=NOCH₂CH₃-C₆H₃ | WO-A 93/15,046 |
| II.8A-8 | 2-CH₃, 4-C[CH₂CH₃]=NOCH₃-C₆H₃ | WO-A 93/15,046 |
| II.8A-9 | 2-CH₃, 4-C[CH₂CH₃]=NOCH₂CH₃-C₆H₃ | WO-A 93/15.046 |
| II.8A-10 | 1-[4-Cl-C₆H₄]-pyrazol-3-yl | DE Pat. Anm. 44 23 612.3 |

**Tabelle II.8B**

| | | | |
|---|---|---|---|
| Verbindungen der Formel IIA, in denen Q Phenyl bedeutet, R' für -N(OCH₃)-CO₂CH₃ steht, n den wert 0 hat, R" für CH₂ON=CR^{α}R^{β} steht, wobei R^{α} und R^{β} die folgende Bedeutung haben | | | |

| **Nr.** | **R**^{**α**} | **R**^{**β**} | **Literatur** |
|---|---|---|---|
| II.8B-1 | CH₃ | 3,5-Cl₂-C₆H₃ | WO-A 93/15,046 |

Bevorzugt setzt man bei der Bereitstellung der Mischungen die reinen Wirkstoffe I und IIA bzw. IIb ein, denen man je nach Bedarf weitere Wirkstoffe gegen Schädlinge (z.B. Insekten, Spinntiere oder Nematoden) oder Schadpilze oder auch herbizide oder wachstumsregulierende Wirkstoffe oder Düngemittel beimischen kann.

Die Mischungen der Verbindungen I und IIA bzw. IIB bzw. die gleichzeitige gemeinsame oder getrennte Verwendung der Verbindungen I und IIA oder I und IIB zeichnen sich durch eine hervorragende Wirkung gegen ein breites Spektrum insbesondere von pflanzenpathogenen Pilzen aus. Sie sind z.T. systemisch wirksam (d.h. sie können bei der Anwendung zum Pflanzenschutz ohne Wirkungsverlust von der behandelten Pflanze aufgenommen und ggf. in der Pflanze transportiert werden) und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen und Kürbisgewächse), Gerste, Gras, Hafer, Kaffee, Mais, Obstpflanzen, Reis, Roggen, Soja, Wein, Weizen, Zierpflanzen, Zuckerrohr und einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Puccinia-Arten an Getreide, Rhizoctonia-Arten an Baumwolle, Reis und Rasen, Ustilago-Arten an Getreide und Zuckerrohr, Venturia inaequalis (Schorf) an Äpfeln, Helminthosporium-Arten an Getreide, Septoria nodorum an Weizen, Botrytis cinera (Grauschimmel) an Erdbeeren, Gemüse, Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Pseudoperonospora-Arten in Hopfen und Gurken, Alternaria-Arten an Gemüse und Obst sowie Fusarium- und Verticillium-Arten.

Sie sind außerdem im Materialschutz (z.B. Holzschutz) anwendbar, beispielsweise gegen Paecilomyces variotii.

Die Verbindungen I und IIA bzw. I und IIB können gleichzeitig, und zwar gemeinsam oder getrennt oder nacheinander aufgebracht werden, wobei die Reihenfolge bei getrennter Applikation im allgemeinen keine Auswirkung auf den Bekämpfungserfolg hat.

Die Verbindungen I und IIA werden üblicherweise in einem Gewichtsverhältnis von 10 : 1 bis 1 : 20, vorzugsweise 5 : 1 bis 1 : 3, insbesondere 3 : 1 bis 1 : 1 (I:IIA) angewendet.

Die Verbindungen I und IIB werden üblicherweise in einem Gewichtsverhältnis von 10 : 1 bis 1 : 20, vorzugsweise 5 : 1 bis 1 : 3, insbesondere 3 : 1 bis 1 : 1 (I:IIB) angewendet.

Die Aufwandmengen der erfindungsgemäßen Mischungen liegen je nach der Art des gewünschten Effektes bei 0,015 bis 10 kg/ha, vorzugsweise 0,1 bis 7 kg/ha, insbesondere 0,2 bis 3 kg/ha.

Die Aufwandmengen liegen dabei für die Verbindungen I bei 0,005 bis 3 kg/ha, vorzugsweise 0,02 bis 2 kg/ha, insbesondere 0,05 bis 1 kg/ha.

Die Aufwandmengen für die Verbindungen IIA liegen im allgemeinen bei 0,005 bis 5 kg/ha, vorzugsweise 0,01 bis 2 kg/ha, insbesondere 0,01 bis 1 kg/ha.

Die Aufwandmengen für die Verbindungen IIB liegen im allgemeinen bei 0,005 bis 5 kg/ha, vorzugsweise 0,01 bis 2 kg/ha, insbesondere 0,01 bis 1 kg/ha.

Bei der Saatgutbehandlung werden im allgemeinen Aufwandmengen an Mischung von 0,001 bis 0,1 g/kg Saatgut, vorzugsweise 0,002 bis 0,05 g/kg Saatgut, insbesondere 0,005 bis 0,5 g/kg Saatgut verwendet.

Sofern für Pflanzen pathogene Schadpilze zu bekämpfen sind erfolgt die gemeinsame oder getrennte Applikation der Verbindungen I und IIA bzw. I und IIB oder der Mischungen aus den Verbindungen I und IIA bzw. I und IIB durch Besprühen oder Bestäuben der Samen, der Pflanzen oder der Böden vor oder nach der Aussaat der Pflanzen oder vor oder nach dem Keimen der Pflanzen.

Die erfindungsgemäßen fungiziden synergistischen Mischungen bzw. die Verbindungen I und IIA bzw. I und IIB können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali- und Ammoniumsalze von aromatischen Sulfonsäuren, z.B. Lignin-, Phenol-, Naphthalin- und Dibutylnaphthalinsulfonsäure, sowie von Fettsäure, Alkyl- und Alkylarylsulfonaten, Alkyl-, Laurylether- und Fettalkoholsulfaten, sowie Salze sulfatierter Hexa-, Hepta- und Octadecanole oder Fettalkoholglycolether, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol oder Tributylphenylpolyglycolether, Alkylarylpolyetheralkohole, Isotridecylalkohol, Fettalkoholethylenoxid-Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver, Streu- und Stäubemittel können durch Mischen oder gemeinsames Vermahlen der Verbindungen I und IIA bzw. I und IIB oder der Mischungen aus den Verbindungen I und IIA bzw. I und IIB mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Kalzium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver und andere feste Trägerstoffe.

Die Formulierungen enthalten im allgemeinen 0,1 bis 95 Gew.-%, vorzugsweise 0,5 bis 90 Gew.-% einer der Verbindungen IA bzw. IB, IIA oder IIB oder der Mischung aus den Verbindungen I und IIA bzw. I und IIB.

Die Wirkstoffe werden dabei in einer Reinheit von 90 % bis 100 %, vorzugsweise 95 % bis 100 % (nach ¹H-NMR- oder HPLC-Spektrum) eingesetzt.

Die Verbindungen I, IIA und IIB bzw. die Mischungen oder die entsprechenden Formulierungen werden angewendet, indem man die Schadpilze, ihren Lebensraum oder die vor Pilzbefall zu schützenden Materialien, Pflanzen, Samen, Böden, Flächen oder Räume mit einer fungizid wirksamen Menge der Mischung bzw. der Verbindungen I und IIA oder I und IIB bei getrennter Ausbringung, behandelt. Die Behandlung kann vor oder nach dem Befall durch die Schadpilze erfolgen.

Die synergistische Wirkung der erfindungsgemäßen Mischungen ließ sich durch die folgenden Versuche zeigen:

### Anwendungsbeispiele

Die Versuche wurden mit den folgenden Verbindungen durchgeführt, denen aus Gründen der Übersicht die Bezeichnungen (A), (B), (C) und (D) zugeordnet wurden: 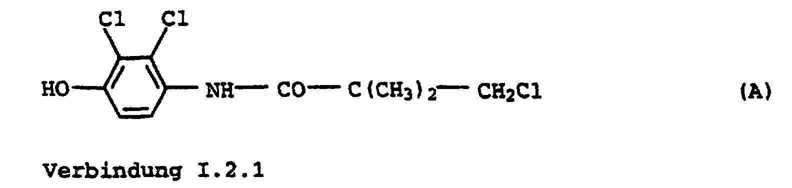 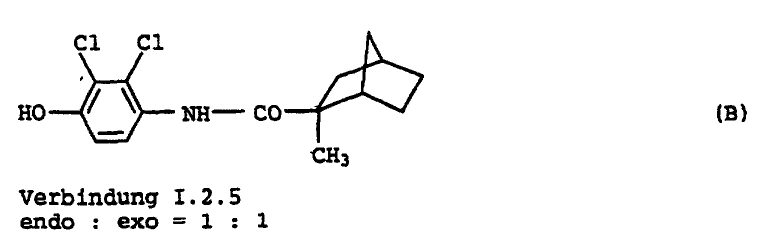 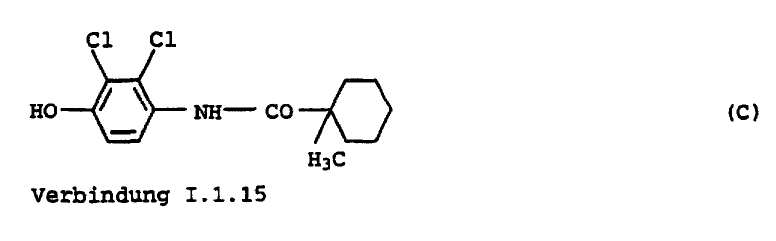 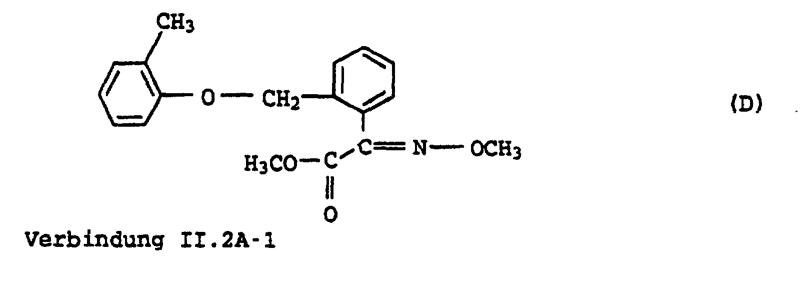 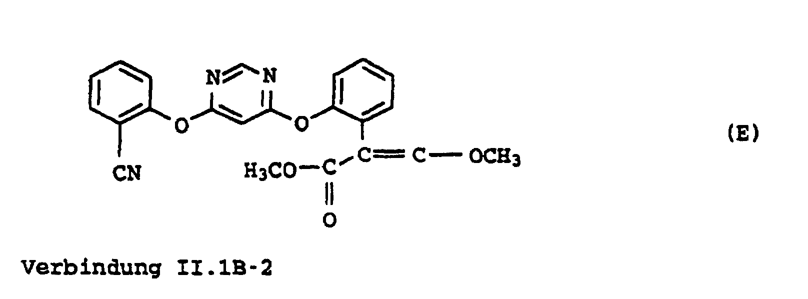 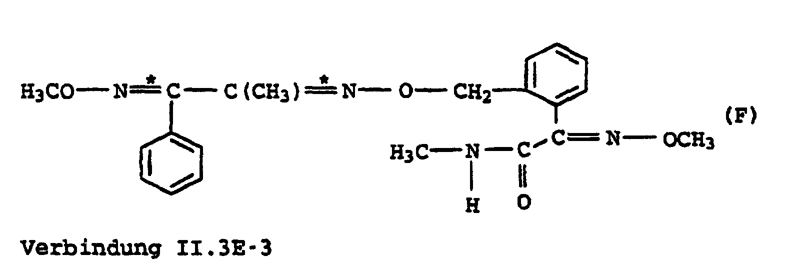 95 % der mit "*" bezeichneten Doppelbindungen lagen in der E-Konfiguration vor.

### Anwendungsbeispiel 1

### Wirksamkeit gegen Botrytis cinerea

Paprikasämlinge der Sorte "Neusiedler Ideal Elite" wurden, nachdem sich 4 bis 5 Blätter gut entwickelt hatten, mit wäßrigen Suspensionen, die 80 % Wirkstoff und 20 % Emulgiermittel in der Trockensubstanz enthielten, tropfnaß gespritzt. Nach dem Antrocknen des Spritzbelages wurden die Pflanzen mit einer Konidienaufschwemmung des Pilzes Botrytis cinerea besprüht und bei 22 bis 24°C in eine Kammer mit hoher Luftfeuchtigkeit gestellt. Nach 5 Tagen hatte sich die Krankheit auf den unbehandelten Kontrollpflanzen so stark entwickelt, daß die entstandenen Blattnekrosen den überwiegenden Teil der Blätter bedeckten.

Die visuell ermittelten Werte für den Prozentanteil befallener Blattfläche wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der Colby-Formel ermittelt (S. R. Colby "Calculating synergistic and antagonistic responses of herbicide combinations", Weeds 15, Seiten 20 bis 22 (1967)) und mit den beobachteten Wirkungsgraden verglichen.

### Unbehandelte Kontrolle: 100 % Befall

**Tabelle 1.1:**

| Wirkungsgrad der einzelnen Wirkstoffe | | |
|---|---|---|
| Wirkstoff | Wirkstoffkonzentration in der Spritzbrühe [ppm] | Wirkungsgrad [% der unbehandelten Kontrolle] |
| (A) | 100 | 84 |
| | 25 | 40 |
| (B) | 100 | 80 |
| | 25 | 65 |
| (C) | 100 | 70 |
| | 25 | 35 |
| (D) | 25 | 0 |
| (E) | 25 | 0 |
| (F) | 25 | 0 |

**Tabelle 1.2:**

| Wirkungsgrad der Mischung | | |
|---|---|---|
| Wirkstoffmischung | beobachteter Wirkungsgrad | erwarteter Wirkungsgrad |
| 100 ppm (A) + 25 ppm (D); Mischungsverhältnis 4 : 1 | 100 100 | 84 84 |
| 25 ppm (A) + 25 ppm (D); Mischungsverhältnis 1 : 1 | 92 | 40 |
| 100 ppm (A) + 25 ppm (E); Mischungsverhältnis 4 : 1 | 99 | 84 |
| 25 ppm (A) + 25 ppm (E); Mischungsverhältnis 1 : 1 | 83 | 40 |
| 100 ppm (A) + 25 ppm (P); Mischungsverhältnis 4 : 1 | 98 | 84 |
| 25 ppm (A) + 25 ppm (F); Mischungsverhältnis 1 : 1 | 99 | 40 40 |
| 100 ppm (B) + 25 ppm (D); Mischungsverhältnis 4 : 1 | 99 | 80 |
| 25 ppm (B) + 25 ppm (D); Mischungsverhältnis 1 : 1 | 99 | 65 |
| 100 ppm (B) + 25 ppm (E); Mischungsverhältnis 4 : 1 | 99 | 80 |
| 25 ppm (B) + 25 ppm (E); Mischungsverhältnis 1 : 1 | 99 | 65 |
| 100 ppm (B) + 25 ppm (F); Mischungsverhältnis 4 : 1 | 100 | 80 |
| 25 ppm (B) + 25 ppm (F); Mischungsverhältnis 1 : 1 | 99 | 65 |
| 100 ppm (C) + 25 ppm (D); Mischungsverhältnis 4 : 1 | 99 | 70 |
| 25 ppm (C) + 25 ppm (D); Mischungsverhältnis 1 : 1 | 75 | 35 |
| 100 ppm (C) + 25 ppm (E); Mischungsverhältnis 4 : 1 | 99 | 70 70 |
| 25 ppm (C) + 25 ppm (E); Mischungsverhältnis 1 : 1 | 65 | 35 |
| 100 ppm (C) + 25 ppm (F); Mischungsverhältnis 4 : 1 | 98 | 70 |
| 25 ppm (C) + 25 ppm (F); Mischungsverhältnis 1 : 1 | 97 | 35 |

Versuchsergebnis: Der beobachtete Wirkungsgrad ist in allen Mischungsverhältnissen höher, als nach der Colby-Formel vorausberechnet.

### Anwendungsbeispiel 2

### Wirksamkeit gegen Botrytis cinerea an Paprikaschoten

Scheiben von grünen Paprikaschoten wurden mit wäßriger Wirkstoffaufbereitung, die 80 % Wirkstoff und 20 % Emulgiermittel in der Trockensubstanz enthielt, tropfnaß besprüht. 2 Stunden nach dem Antrocknen des Spritzbelages wurden die Fruchtscheiben mit einer Sporensuspension von Botrytis cinerea, die 1,7 x 10⁶ Sporen pro ml einer 2 %igen Biomalzlösung enthielt, inokuliert. Die inokulierten Fruchtscheiben wurden anschließend in feuchten Kammern bei 18°C für 4 Tage aufgestellt. Dann erfolgte visuell die Auswertung der Botrytis-Entwicklung auf den befallenen Fruchtscheiben.

Die visuell ermittelten Werte für den Prozentanteil befallener Blattfläche wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der Colby-Formel ermittelt (S. R. Colby "Calculating synergistic and antagonistic responses of herbicide combinations", Weeds 15, Seiten 20 bis 22 (1967)) und mit den beobachteten Wirkungsgraden verglichen.

### Unbehandelte Kontrolle: 100 % Befall

**Tabelle 2.1:**

| Wirkungsgrad der einzelnen Wirkstoffe | | |
|---|---|---|
| Wirkstoff | Wirkstoffkonzentration in der Spritzbrühe [ppm] | Wirkungsgrad [% der unbehandelten Kontrolle] |
| (A) | 100 | 20 |
| (B) | 100 | 25 |
| | 25 | 10 |
| (C) | 100 | 25 |
| | 25 | 30 |
| (D) | 25 | 77 |
| (F) | 25 | 10 |

**Tabelle 2.2:**

| Wirkungsgrad der Mischung | | |
|---|---|---|
| Wirkstoffmischung | beobachteter Wirkungsgrad | erwarteter Wirkungsgrad |
| 100 ppm (A) + 25 ppm (F); Mischungsverhältnis 4 : 1 | 77 | 48 |
| 25 ppm (B) + 25 ppm (D); Mischungsverhältnis 1 : 1 | 90 | 79 |
| 100 ppm (B) + 25 ppm (F); Mischungsverhältnis 4 : 1 | 80 | 51 |
| 25 ppm (B) + 25 ppm (F); Mischungsverhältnis 1 : 1 | 75 | 42 |
| 100 ppm (C) + 25 ppm (F); Mischungsverhältnis 4 : 1 | 97 | 51 |
| 25 ppm (C) + 25 ppm (F); Mischungsverhältnis 1 : 1 | 89 | 55 |

Versuchsergebnis: Der beobachtete Wirkungsgrad ist in allen Mischungsverhältnissen höher, als nach der Colby-Formel vorausberechnet.

## Patentansprüche (Patentansprüche für folgende(n) Vertragsstaat(en): DK, SE)

1. Fungizide Mischung, enthaltend
a) ein p-Hydroxyanilinderivat der Formel I 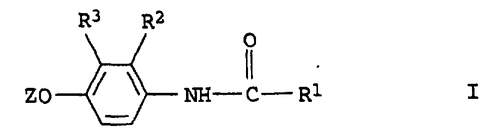 in der die Reste die folgende Bedeutung haben:
R¹ Wasserstoff, C₁-C₈-Alkyl, welches partiell oder vollständig halogeniert sein und/oder eine oder zwei der folgenden Gruppen tragen kann: C₁-C₄-Alkoxy, C₁-C₄-Halogenalkoxy, C₁-C₄-Alkylthio, C₃-C₇-Cycloalkyl, C₅-C₇-Cycloalkenyl, wobei die cyclischen Gruppen ihrerseits ein bis drei Halogenatome, C₁-C₃-Alkylgruppen und/oder C₁-C₃-Alkoxygruppen tragen können und Aryl, welches partiell oder vollständig halogeniert sein und/oder einen bis drei der folgenden Substituenten tragen kann: Nitro, Cyano, C₁-C₄-Alkyl, C₁-C₄-Halogenalkyl, C₁-C₄-Alkoxy, C₁-C₄-Halogenalkoxy und C₁-C₄-Alkylthio;
C₃-C₆-Cycloalkyl oder C₃-C₆-Cycloalkenyl, wobei diese Reste partiell oder vollständig halogeniert sein und/oder eine bis fünf der folgenden Gruppen tragen können: C₁-C₄-Alkyl, C₁-C₄-Halogenalkyl, C₁-C₄-Alkoxy, C₁-C₄-Halogenalkoxy und Aryl, welches partiell oder vollständig halogeniert sein und/oder einen bis drei der folgenden Substituenten tragen kann: Nitro, Cyano, C₁-C₄-Alkyl, C₁-C₄-Halogenalkyl, C₁-C₄-Alkoxy, C₁-C₄-Halogenalkoxy und C₁-C₄-Alkylthio;
C₆-C₁₅-Bicycloalkyl oder C₇-C₁₅-Bicycloalkenyl, wobei diese Reste partiell oder vollständig halogeniert sein und/oder eine bis fünf der folgenden Gruppen tragen können: C₁-C₄-Alkyl, C₁-C₄-Halogenalkyl, C₁-C₄-Alkoxy, C₁-C₄-Halogenalkoxy und Aryl, welches partiell oder vollständig halogeniert sein und/oder einen bis drei der folgenden Substituenten tragen kann: Nitro, Cyano, C₁-C₄-Alkyl, C₁-C₄-Halogenalkyl, C₁-C₄-Alkoxy, C₁-C₄-Halogenalkoxy und C₁-C₄-Alkylthio;
R² und R³ unabhängig voneinander Halogen, C₁-C₄-Alkyl, C₁-C₄-Halogenalkyl, C₁-C₄-Alkoxy oder C₁-C₄-Halogenalkoxy;
z H oder R⁴-(CO)-, wobei
R⁴ C₁-C₆-Alkyl oder C₂-C₆-Alkenyl, wobei diese Gruppen partiell oder vollständig halogeniert sein und/oder einen der folgenden Reste tragen können: C₁-C₄-Alkoxy, C₁-C₄-Halogenalkoxy, C₁-C₄-Alkylthio, C₃-C₇-Cycloalkyl, C₅-C₇-Cycloalkenyl oder Aryl, wobei die aromatischen Reste ihrerseits eine bis drei der folgenden Gruppen tragen können: Nitro, Cyano, Halogen, C₁-C₄-Alkyl, C₁-C₄-Halogenalkyl, C₁-C₄-Alkoxy, C₁-C₄-Halogenalkoxy und C₁-C₄-Alkylthio;
C₃-C₇-Cycloalkyl oder C₅-C₇-Cycloalkenyl, wobei diese Gruppen ein bis drei der folgenden Reste tragen können: Halogen, C₁-C₄-Alkyl, C₁-C₄-Halogenalkyl und C₁-C₄-Alkoxy;
Aryl, welches partiell oder vollständig halogeniert sein und/oder ein bis drei der folgenden Reste tragen kann: Nitro, Cyano, C₁-C₄-Alkyl, C₁-C₄-Halogenalkyl, C₁-C₄-Alkoxy, C₁-C₄-Halogenalkoxy und C₁-C₄-Alkylthio;
OR⁵ oder NR⁶R⁷, wobei
R⁵ C₁-C₆-Alkyl oder C₂-C₆-Alkenyl bedeutet, wobei diese Gruppen partiell oder vollständig halogeniert sein und/oder einen der folgenden Reste tragen können: C₁-C₄-Alkoxy, C₁-C₄-Halogenalkoxyl C₁-C₄-Alkylthio, C₃-C₇-Cycloalkyl, C₅-C₇-Cycloalkenyl oder Aryl, wobei die aromatischen Reste ihrerseits eine bis drei der folgenden Gruppen tragen können: Nitro, Cyano, Halogen, C₁-C₄-Alkyl, C₁-C₄-Halogenalkyl, C₁-C₄-Alkoxy, C₁-C₄-Halogenalkoxy und C₁-C₄-Alkylthio;
C₃-C₇-Cycloalkyl oder C₅-C₇-Cycloalkenyl bedeutet, wobei diese Gruppen einen bis drei der folgenden Reste tragen können: Halogen, C₁-C₄-Alkyl, C₁-C₄-Halogenalkyl und C₁-C₄-Alkoxy;
Aryl, welches partiell oder vollständig halogeniert sein und/oder einen bis drei der folgenden Reste tragen kann: Nitro, Cyano, C₁-C₄-Alkyl, C₁-C₄-Halogenalkyl, C₁-C₄-Alkoxy, C₁-C₄-Halogenalkoxy und C₁-C₄-Alkylthio;
R⁶ C₁-C₆-Alkyl oder C₂-C₆-Alkenyl, wobei diese Gruppen partiell oder vollständig halogeniert sein und/oder einen der folgenden Reste tragen können: C₁-C₄-Alkylthio C₃-C₇-Cycloalkyl, C₅-C₇-Cycloalkenyl oder Aryl, wobei die aromatischen Reste ihrerseits eine bis drei der folgenden Gruppen tragen können: Nitro, Cyano, Halogen, C₁-C₄-Alkyl, C₁-C₄-Halogenalkyl, C₁-C₄-Alkoxy, C₁-C₄-Halogenalkoxy und C₁-C₄-Alkylthio;
C₃-C₇-Cycloalkyl oder C₅-C₇-Cycloalkenyl bedeutet, wobei diese Gruppen ein bis drei der folgenden Reste tragen können: Halogen, C₁-C₄-Alkyl, C₁-C₄-Halogenalkyl und C₁-C₄-Alkoxy;
Aryl, welches partiell oder vollständig halogeniert sein und/oder einen bis drei der folgenden Reste tragen kann: Nitro, Cyano, C₁-C₄-Alkyl, C₁-C₄-Halogenalkyl, C₁-C₄-Alkoxy, C₁-C₄-Halogenalkoxy und C₁-C₄-Alkylthio; und
R⁷ Wasserstoff oder C₁-C₆-Alkyl,
und
b) einen Wirkstoff der Formel IIA oder IIB 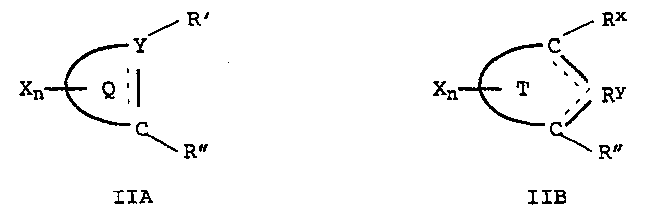 in denen .... für eine Doppel- oder Einfachbindung steht und der Index und die Substituenten die folgende Bedeutung haben:
R' -C[CO₂CH₃]=CHOCH₃, -C[CO₂CH₃]=NOCH₃, -C[CONHCH₃]=NOCH₃, -C[CO₂CH₃]=CHCH₃, -C[CO₂CH₃]=CHCH₂CH₃, -C[COCH₃]=NOCH₃, -C[COCH₂CH₃]=NOCH₃, -N(OCH₃)-CO₂CH₃, -N(CH₃)-CO₂CH₃, -N(CH₂CH₃) -CO₂CH₃;
_{R"} ein C-organischer Rest, welcher direkt oder über eine Oxy-, Mercapto-, Amino-, oder Alkylaminogruppe gebunden ist;
zusammen mit einer Gruppe X und dem Ring Q bzw. T, an den sie gebunden sind, ein ggf. subst. bicyclisches, partiell oder vollständig ungesättigtes System, welches neben Kohlenstoffringgliedern Heteroatome aus der Gruppe Sauerstoff, Schwefel und Stickstoff enthalten kann;
R^{x} -OC[CO₂CH₃]=CHOCH₃, -OC[CO₂CH₃]=CHCH₃, -OC[CO₂CH₃]=CHCH₂CH₃, -SC[CO₂CH₃]=CHOCH₃, -SC[CO₂CH₃]=CHCH₃, -SC[CO₂CH₃]=CHCH₂CH₃, -N(CH₃)C[CO₂CH₃]=CHOCH₃, -N(CH₃)C[CO₂CH₃]=NOCH₃, -CH₂C[CO₂CH₃]=CHOCH₃, -CH₂C[CO₂CH₃]=NOCH₃, -CH₂C[CONHCH₃]=NOCH₃;
R^{y} Sauerstoff, Schwefel, =CH- oder =N-;
n 0, 1, 2 oder 3, wobei die Reste X verschieden sein können, wenn n > 1 ist;
X Cyano, Nitro, Halogen, C₁-C₄-Alkyl, C₁-C₄-Halogenalkyl, C₁-C₄-Alkoxy, C₁-C₄-Halogenalkoxy, C₁-C₄-Alkylthio;
für den Fall, daß n > 1 ist, eine an zwei benachbarte C-Atome des Phenylrings gebundene C₃-C₅-Alkylen-, C₃-C₅-Alkenylen-, Oxy-C₂-C₄-alkylen-, Oxy-C₁-C₃-alkylenoxy-, Oxy-C₂-C₄-alkenylen-, Oxy-C₂-C₄-alkenylenoxy- oder Butadiendiylgruppe, wobei diese Ketten ihrerseits ein bis drei der folgenden Reste tragen können: Halogen, C₁-C₄-Alkyl, C₁-C₄-Halogenalkyl, C₁-C₄-Alkoxy, C₁-C₄-Halogenalkoxy oder C₁-C₄-Alkylthio,
Y =C- oder -N-;
Q Phenyl, Pyrrolyl, Thienyl, Furyl, Pyrazolyl, Imidazolyl, Oxazolyl, Isoxazolyl, Thiazolyl, Thiadiazolyl, Triazolyl, Pyridinyl, 2-Pyridinyl, Pyrimidinyl und Triazinyl;
T Phenyl, Oxazolyl, Thiazolyl, Thiadiazolyl, Oxadiazolyl, Pyridinyl, Pyrimidinyl und Triazinyl,
in einer synergistisch wirksamen Menge.

2. Mischung nach Anspruch 1, dadurch gekennzeichnet, daß in den Verbindungen 1 gemäß Anspruch 1 Z für Wasserstoff steht.

3. Mischung nach Anspruch 2, dadurch gekennzeichnet, daß es sich bei der Verbindung I gemäß Anspruch 1 um eine Verbindung aus folgender Tabelle handelt:

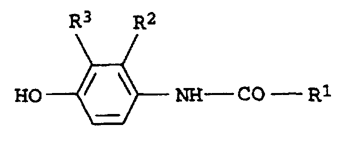

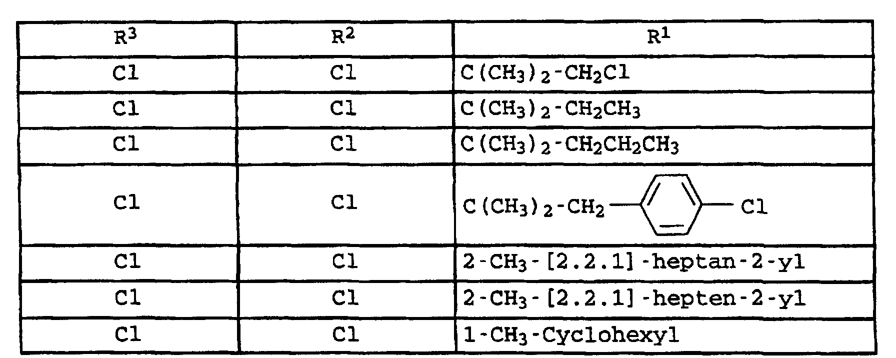

4. Mischungen nach einem der Ansprüche 1 bis 3, dadurch gekennzeichnet, daß es sich bei der Verbindung IIA gemäß Anspruch 1, wobei Q für Phenyl und n für Null steht, um eine Verbindung aus folgender Tabelle handelt:
| R' | R'' |
|---|---|
| -C(CO₂CH₃)=CHOCH₃ | 2-CH₃-C₆H₄-OCH₂ |
| -C(CO₂CH₃)CHOCH₃ | 2,5-(CH₃)₂-C₆H₃-OCH₂ |
| -C(CO₂CH₃)=CHOCH₃ | 2-CH₂CH₂CH₃, 6-CF₃-pyrimidin-4-yl-OCH₂ |
| -C(CO₂CH₃)=CHOCH₃ | C₆H₅-O |
| -C(CO₂CH₃)=CHOCH₃ | 6-[2-CN-C₆H₄-O]-pyrimidin-4-yl-O |
| -C(CO₂CH₃)=CHOCH₃ | 3-CF₃-C₆H₄-C(CH₃)=N-OCH₂ |
| -C(CO₂CH₃)=CHOCH₃ | CH₃O-N=C(4-Cl-C₆H₄)-C(CH₃)=N-OCH₂ |
| -C(CO₂CH₃)=NOCH₃ | 2-CH₃-C₆H₄-OCH₂ |
| -C(CO₂CH₃)=NOCH₃ | 2,5-(CH₃)₂-C₆H₃-OCH₂ |
| -C(CO₂CH₃)=NOCH₃ | 3-CF₃-C₆H₄-C(CH₃)=N-OCH₂ |
| -C(CONHCH₃)=NOCH₃ | 2-CH₃-C₆H₄-OCH₂ |
| -C(CONHCH₃)=NOCH₃ | 2,5-(CH₃)₂-C₆H₃-OCH₂ |
| -C(CONHCH₃)=NOCH₃ | 1-(4-Cl-C₆H₄)-pyrazol-3-yl-OCH₂ |
| -C(CONHCH₃)=NOCH₃ | 3-CF₃-C₆H₄-C(CH₃)=N-OCH₂ |
| -C(CONHCH₃)=NOCH₃ | CH₃O-N=C(4-Cl-C₆H₄)-C(CH₃)=N-OCH₂ |
| -N(OCH₃)-CO₂CH₃ | 2-CH₃-C₆H₄-OCH₂ |
| -N(OCH₃)-CO₂CH₃ | 2,5-(CH₃)₂-C₆H₄-OCH₂ |
| -N(OCH₃)-CO₂CH₃ | 1-(4-Cl-C₆H₄)-pyrazol-3-yl-OCH₂ |
| -N(OCH₃)-CO₂CH₃ | 3,5-Cl₂-C₆H₃-C(CH₃)=N-OCH₂ |

5. Fungizide Mischung nach einem der Ansprüche 1 bis 4, dadurch gekennzeichnet, daß das Gewichtsverhältnis der Verbindung I zu der Verbindung IIA oder IIB 20:1 bis 0,05:1 beträgt.

6. Verfahren zur Bekämpfung von Schadpilzen, dadurch gekennzeichnet, daß man die Schadpilze, deren Lebensraum oder die von ihnen freizuhaltenden Pflanzen, Samen, Böden, Flächen, Materialien oder Räume mit einer Verbindung der Formel I gemäß Anspruch 1 und einer Verbindung der Formel IIA oder IIB gemäß Anspruch 1 behandelt.

7. Verfahren nach Anspruch 6, dadurch gekennzeichnet, daß man die Verbindung I gemäß Anspruch 1 und die Verbindung IIA oder IIB gemäß Anspruch 1 gleichzeitig, und zwar gemeinsam oder getrennt, oder nacheinander ausbringt.

8. Verfahren nach Anspruch 6 oder 7, dadurch gekennzeichnet, daß man die Verbindung I gemäß Anspruch 1 in einer Menge von 0,05 bis 1 kg/ha aufwendet.

9. Verfahren nach den Ansprüchen 6 bis 8, dadurch gekennzeichnet, daß man die Verbindung IIA oder IIB gemäß Anspruch 1 in einer Menge von 0,01 bis 1 kg/ha anwendet.

10. Verwendung der Verbindung I gemäß den Ansprüchen 1 bis 3 zur Herstellung einer fungizid wirksamen synergistischen Mischung gemäß den Ansprüchen 1 bis 4.

## Patentansprüche (Patentansprüche für folgende(n) Vertragsstaat(en): AT, BE, CH, DE, ES, FR, GB, IT, NL, PT)

1. Fungizide Mischung, enthaltend
a) ein p-Hydroxyanilinderivat der Formel I 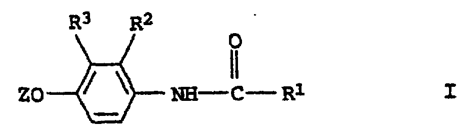 in der die Reste die folgende Bedeutung haben:
R¹ Wasserstoff, C₁-C₈-Alkyl, welches partiell oder vollständig halogeniert sein und/oder eine oder zwei der folgenden Gruppen tragen kann: C₁-C₄-Alkoxy, C₁-C₄-Halogenalkoxy, C₁-C₄-Alkylthio, C₃-C₇-Cycloalkyl, C₅-C₇-Cycloalkenyl, wobei die cyclischen Gruppen ihrerseits ein bis drei Halogenatome, C₁-C₃-Alkyl-gruppen und/oder C₁-C₃-Alkoxygruppen tragen können und Aryl, welches partiell oder vollständig halogeniert sein und/oder einen bis drei der folgenden Substituenten tragen kann: Nitro, Cyano, C₁-C₄-Alkyl, C₁-C₄-Halogenalkyl, C₁-C₄-Alkoxy, C₁-C₄-Halogenalkoxy und C₁-C₄-Alkylthio;
C₃-C₆-Cycloalkyl oder C₃-C₆-Cycloalkenyl, wobei diese Reste partiell oder vollständig halogeniert sein und/oder eine bis fünf der folgenden Gruppen tragen können: C₁-C₄-Alkyl, C₁-C₄-Halogenalkyl, C₁-C₄-Alkoxy, C₁-C₄-Halogenalkoxy und Aryl, welches partiell oder vollständig halogeniert sein und/oder einen bis drei der folgenden Substituenten tragen kann: Nitro, Cyano, C₁-C₄-Alkyl, C₁-C₄-Halogenalkyl, C₁-C₄-Alkoxy, C₁-C₄-Halogenalkoxy und C₁-C₄-Alkylthio;
C₆-C₁₅-Bicycloalkyl oder C₇-C₁₅-Bicycloalkenyl, wobei diese Reste partiell oder vollständig halogeniert sein und/oder eine bis fünf der folgenden Gruppen tragen können: C₁-C₄-Alkyl, C₁-C₄-Halogenalkyl, C₁-C₄-Alkoxy, C₁-C₄-Halogenalkoxy und Aryl, welches partiell oder vollständig halogeniert sein und/oder einen bis drei der folgenden Substituenten tragen kann: Nitro, Cyano, C₁-C₄-Alkyl, C₁-C₄-Halogenalkyl, C₁-C₄-Alkoxy, C₁-C₄-Halogenalkoxy und C₁-C₄-Alkylthio;
R² und R³ unabhängig voneinander Halogen, C₁-C₄-Alkyl, C₁-C₄-Halogenalkyl, C₁-C₄-Alkoxy oder C₁-C₄-Halogenalkoxy;
z H oder R⁴-(CO)-, wobei
R⁴ C₁-C₆-Alkyl oder C₂-C₆-Alkenyl, wobei diese Gruppen partiell oder vollständig halogeniert sein und/oder einen der folgenden Reste tragen können: C₁-C₄-Alkoxy, C₁-C₄-Halogenalkoxy, C₁-C₄-Alkylthio, C₃-C₇-Cycloalkyl, C₅-C₇-Cycloalkenyl oder Aryl, wobei die aromatischen Reste ihrerseits eine bis drei der folgenden Gruppen tragen können: Nitro, Cyano, Halogen, C₁-C₄-Alkyl, C₁-C₄-Halogenalkyl, C₁-C₄-Alkoxy, C₁-C₄-Halogenalkoxy und C₁-C₄-Alkylthio;
C₃-C₇-Cycloalkyl oder C₅-C₇-Cycloalkenyl, wobei diese Gruppen ein bis drei der folgenden Reste tragen können: Halogen, C₁-C₄-Alkyl, C₁-C₄-Halogenalkyl und C₁-C₄-Alkoxy;
Aryl, welches partiell oder vollständig halogeniert sein und/oder ein bis drei der folgenden Reste tragen kann: Nitro, Cyano, C₁-C₄-Alkyl, C₁-C₄-Halogenalkyl, C₁-C₄-Alkoxy, C₁-C₄-Halogenalkoxy und C₁-C₄-Alkylthio;
OR⁵ oder NR⁶R⁷, wobei
R⁵ C₁-C₆-Alkyl oder C₂-C₆-Alkenyl bedeutet, wobei diese Gruppen partiell oder vollständig halogeniert sein und/oder einen der folgenden Reste tragen können: C₁-C₄-Alkoxy, C₁-C₄-Halogenalkoxy, C₁-C₄-Alkylthio, C₃-C₇-Cycloalkyl, C₅-C₇-Cycloalkenyl oder Aryl, wobei die aromatischen Reste ihrerseits eine bis drei der folgenden Gruppen tragen können: Nitro, Cyano, Halogen, C₁-C₄-Alkyl, C₁-C₄-Halogenalkyl, C₁-C₄-Alkoxy, C₁-C₄-Halogenalkoxy und C₁-C₄-Alkylthio;
C₃-C₇-Cycloalkyl oder C₅-C₇-Cycloalkenyl bedeutet, wobei diese Gruppen einen bis drei der folgenden Reste tragen können; Halogen, C₁-C₄-Alkyl, C₁-C₄-Halogenalkyl und C₁-C₄-Alkoxy;
Aryl, welches partiell oder vollständig halogeniert sein und/oder einen bis drei der folgenden Reste tragen kann: Nitro, Cyano, C₁-C₄-Alkyl, C₁-C₄-Halogenalkyl, C₁-C₄-Alkoxy,C₁-C₄-Halogenalkoxy und C₁-C₄-Alkylthio;
R⁶ C₁-C₆-Alkyl oder C₂-C₆-Alkenyl, wobei diese Gruppen partiell oder vollständig halogeniert sein und/oder einen der folgenden Reste tragen können: C₁-C₄-Alkylthio C₃-C₇-Cycloalkyl, C₅-C₇-Cycloalkenyl oder Aryl, wobei die aromatischen Reste ihrerseits eine bis drei der folgenden Gruppen tragen können: Nitro, Cyano, Halogen, C₁-C₄-Alkyl, C₁-C₄-Halogenalkyl, C₁-C₄-Alkoxy, C₁-C₄-Halogenalkoxy und C₁-C₄-Alkylthio;
C₃-C₇-Cycloalkyl oder C₅-C₇-Cycloalkenyl bedeutet, wobei diese Gruppen ein bis drei der folgenden Reste tragen können: Halogen, C₁-C₄-Alkyl, C₁-C₄-Halogenalkyl und C₁-C₄-Alkoxy;
Aryl, welches partiell oder vollständig halogeniert sein und/oder einen bis drei der folgenden Reste tragen kann: Nitro, Cyano, C₁-C₄-Alkyl, C₁-C₄-Halogenalkyl, C₁-C₄-Alkoxy, C₁-C₄-Halogenalkoxy und C₁-C₄-Alkylthio; und
R⁷ Wasserstoff oder C₁-C₆-Alkyl,
und
b) einen Wirkstoff der Formel IIA oder IIB 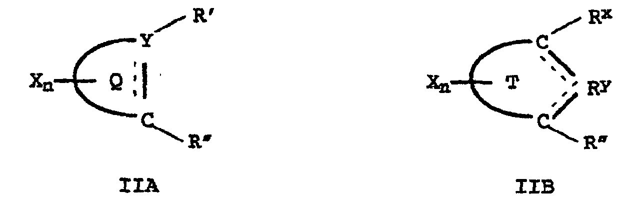 in denen .... für eine Doppel- oder Einfachbindung steht und der Index und die Substituenten die folgende Bedeutung haben:
R' -C[CO₂CH₃]=CHOCH₃, -C[CO₂CH₃]=NOCH₃, -C[CONHCH₃]=NOCH₃, -C[CO₂CH₃]=CHCH₃, -C[CO₂CH₃]=CHCH₂CH₃, -C[COCH₃]=NOCH₃, -C[COCH₂CH₃]=NOCH₃, -N(OCH₃)-CO₂CH₃, -N(CH₃)-CO₂CH₃, -N(CH₂CH₃)-CO₂CH₃;
R" ein C-organischer Rest, welcher direkt oder über eine Oxy-, Mercapto-, Amino-, oder Alkylaminogruppe gebunden ist;
zusammen mit einer Gruppe X und dem Ring Q bzw. T, an den sie gebunden sind, ein ggf. subst. bicyclisches, partiell oder vollständig ungesättigtes System, welches neben Kohlenstoffringgliedern Heteroatome aus der Gruppe Sauerstoff, Schwefel und Stickstoff enthalten kann;
R^{x} -OC[CO₂CH₃]=CHOCH₃, -OC[CO₂CH₃]=CHCH₃, -OC[CO₂CH₃]=CHCH₂CH₃, -SC[CO₂CH₃]=CHOCH₃, -SC[CO₂CH₃]=CHCH₃, -SC[CO₂CH₃]=CHCH₃CH₃, -N(CH₃)C [CO₂CH₃]=CHOCH₃, -N (CH₃)C[CO₂CH₃]=NOCH₃, -CH₂C[CO₂CH₃]=CHOCH₃, -CH₂C[CO₂CH₃]=NOCH₃, -CH₂C[CONHCH₃]=NOCH₃;
R^{y} Sauerstoff, Schwefel, =CH- oder =N-;
n 0, 1, 2 oder 3, wobei die Reste X verschieden sein können, wenn n > 1 ist;
X Cyano, Nitro, Halogen, C₁-C₄-Alkyl, C₁-C₄-Halogenalkyl, C₁-C₄-Alkoxy, C₁-C₄-Halogenalkoxy, C₁-C₄-Alkylthio;
für den Fall, daß n > 1 ist, eine an zwei benachbarte C-Atome des Phenylrings gebundene C₃-C₅-Alkylen-, C₃-C₅-Alkenylen-, Oxy-C₂-C₄-alkylen-, Oxy-C₁-C₃-alkylenoxy-, Oxy-C₂-C₄-alkenylen- Oxy-C₂-C₄-alkenylenoxy- oder Butadiendiylgruppe, wobei diese Ketten ihrerseits ein bis drei der folgenden Reste tragen können: Halogen, C₁-C₄-Alkyl, C₁-C₄-Halogenalkyl, C₁-C₄-Alkoxy, C₁-C₄-Halogenalkoxy oder C₁-C₄-Alkylthio,
Y =C- oder -N-;
Q Phenyl, Pyrrolyl, Thienyl, Furyl, Pyrazolyl, Imidazolyl, Oxazolyl, Isoxazolyl, Thiazolyl, Thiadiazolyl, Triazolyl, Pyridinyl, 2-Pyridinyl, Pyrimidinyl und Triazinyl;
T Phenyl, Oxazolyl, Thiazolyl, Thiadiazolyl, Oxadiazolyl, Pyridinyl, Pyrimidinyl und Triazinyl,
ausgenommen Mischungen, in denen in Formel I
R¹ = 1-Methyl-cyclohexyl,
R² und R³ = Chlor und
Z = Wasserstoff und
in Formel IIA
R' = -C[CONHCH₃]=NOCH₃,
R" = Phenoxy oder 2,5 -Dimethylphenoxymethyl,
n = Null und
Q = Phenyl ist,
in einer synergistisch wirksamen Menge.

2. Mischung nach Anspruch 1, dadurch gekennzeichnet, daß in den Verbindungen I gemäß Anspruch 1 Z für Wasserstoff steht.

3. Mischung nach Anspruch 2, dadurch gekennzeichnet, daß es sich bei der Verbindung I gemäß Anspruch 1 um eine Verbindung aus folgender Tabelle handelt:

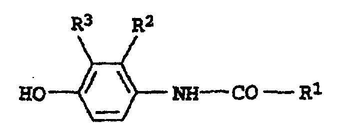

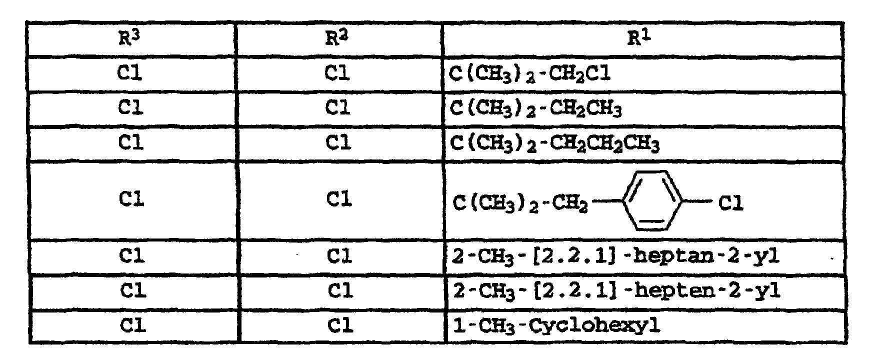

4. Mischungen nach einem der Ansprüche 1 bis 3, dadurch gekennzeichnet, daß es sich bei der Verbindung IIA gemäß Anspruch 1, wobei Q für Phenyl und n für Null steht, um eine Verbindung aus folgender Tabelle handelt:
| R' | R'' |
|---|---|
| -C(CO₂CH₃)=CHOCH₃ | 2-CH3-C₆H₄-OCH₂ |
| -C(CO₂CH₃)=CHOCH₃ | 2,5-(CH₃)₂-C₆H₃-OCH₂ |
| -C(CO₂CH₃)=CHOCH₃ | 2-CH₂CH₂CH₃, 6-CF₃-pyrimidin-4-yl |
| -C(CO₂CH₃)=CHOCH₃ | C₆H₅-O |
| -C(CO₂CH₃)=CHOCH₃ | 6-[2-CN-C₆H₄-O]-pyrimidin-4-yl |
| -C(CO₂CH₃)=CHOCH₃ | 3-CF₃-C₆H₄-C(CH₃)=N-OCH₂ |
| -C(CO₂CH₃)=CHOCH₃ | CH₃O-N=C (4-Cl-C₆H₄)-C(CH₃)=N-OCH₂ |
| -C(CO₂CH₃)=NOCH₃ | 2-CH₃-C₆H₄-OCH₂ |
| -C(CO₂CH₃)=NOCH₃ | 2,5-(CH₃)₂-C₆H₃-OCH₂ |
| -C(CO₂CH₃)=NOCH₃ | 3-CF₃-C₆H₄-C(CH₃)=N-OCH₂ |
| -C(CONHCH₃)=NOCH₃ | 2-CH₃-C₆H₄-OCH₂ |
| -C(CONHCH₃)=NOCH₃ | 2,5-(CH₃)₂-C₆H₃-OCH₂ |
| -C(CONHCH₃)=NOCH₃ | 1-(4-Cl-C₆H₄)-pyrazol-3-yl-OCH₂ |
| -C(CONHCH₃)=NOCH₃ | 3-CF₃-C₆H₄-C(CH₃)=N-OCH₂ |
| -C(CONHCH₃)=NOCH₃ | CH₃O-N=C(4-Cl-C₆H₄)-C(CH₃)=N-OCH₂ |
| -N(OCH₃)-CO₂CH₃ | 2-CH₃-C₆H₄-OCH₂ |
| -N(OCH₃)-CO₂CH₃ | 2,5-(CH₃)₂-C₆H₄-OCH₂ |
| -N(OCH₃)-CO₂CH₃ | 1-(4-Cl-C₆H₄)-pyrazol-3-yl-OCH₂ |
| -N(OCH₃)-CO₂CH₃ | 3,5-Cl₂-C₆H₃-C(CH₃)=N-OCH₂ |

5. Fungizide Mischung nach einem der Ansprüche 1 bis 4, dadurch gekennzeichnet, daß das Gewichtsverhältnis der Verbindung I zu der Verbindung IIA oder IIB 20:1 bis 0,05:1 beträgt.

6. Verfahren zur Bekämpfung von Schadpilzen, dadurch gekennzeichnet, daß man die Schadpilze, deren Lebensraum oder die von ihnen freizuhaltenden Pflanzen, Samen, Böden, Flächen, Materialien oder Räume mit einer Verbindung der Formel I gemäß Anspruch 1 und einer Verbindung der Formel IIA oder IIB gemäß Anspruch 1 behandelt.

7. Verfahren nach Anspruch 6, dadurch gekennzeichnet, daß man die Verbindung I gemäß Anspruch 1 und die Verbindung IIA oder IIB gemäß Anspruch 1 gleichzeitig, und zwar gemeinsam oder getrennt, oder nacheinander ausbringt.

8. Verfahren nach Anspruch 6 oder 7, dadurch gekennzeichnet, daß man die Verbindung I gemäß Anspruch 1 in einer Menge von 0,05 bis 1 kg/ha aufwendet.

9. Verfahren nach den Ansprüchen 6 bis 8, dadurch gekennzeichnet, daß man die Verbindung IIA oder IIB gemäß Anspruch 1 in einer Menge von 0,01 bis 1 kg/ha anwendet.

10. Verwendung der Verbindung I gemäß den Ansprüchen 1 bis 3 zur Herstellung einer fungizid wirksamen synergistischen Mischung gemäß den Ansprüchen 1 bis 4.

## Claims (Claims for the following Contracting State(s): AT, BE, CH, DE, ES, FR, GB, IT, NL, PT)

1. A fungicidal mixture comprising
a) a p-hydroxyaniline derivative of the formula I 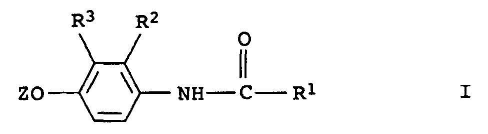 where the radicals have the following meanings:
R¹ is hydrogen, C₁-C₈-alkyl which can be partially or fully halogenated and/or can have attached to it one or two of the following groups: C₁-C₄-alkoxy, C₁-C₄-haloalkoxy, C₁-C₄-alkylthio, C₃-C₇-cycloalkyl, C₅-C₇-cycloalkenyl, it being possible for the cyclic groups, in turn, to have attached to them one to three halogen atoms, C₁-C₃-alkyl groups and/or C₁-C₃-alkoxy groups, and aryl which can be partially or fully halogenated and/or can have attached to it one to three of the following substitutents: nitro, cyano, C₁-C₄-alkyl, C₁-C₄-haloalkyl, C₁-C₄-alkoxy, C₁-C₄-haloalkoxy and C₁-C₄-alkylthio;
C₃-C₆-cycloalkyl or C₃-C₆-cycloalkenyl, it being possible for these radicals to be partially or fully halogenated and/or to have attached to them one to five of the following groups: C₁-C₄-alkyl, C₁-C₄-haloalkyl, C₁-C₄-alkoxy, C₁-C₄-haloalkoxy and aryl which can be partially or fully halogenated and/or can have attached to it one to three of the following substituents: nitro, cyano, C₁-C₄-alkyl, C₁-C₄-haloalkyl, C₁-C₄-alkoxy, C₁-C₄-haloalkoxy and C₁-C₄-alkylthio;
C₆-C₁₅-bicycloalkyl or C₇-C₁₅-bicycloalkenyl, it being possible for these radicals to be partially or fully halogenated and/or to have attached to them one to five of the following groups: C₁-C₄-alkyl, C₁-C₄-haloalkyl, C₁-C₄-alkoxy, C₁-C₄-haloalkoxy and aryl which can be partially or fully halogenated and/or can have attached to it one to three of the following substituents: nitro, cyano, C₁-C₄-alkyl, C₁-C₄-haloalkyl, C₁-C₄-alkoxy, C₁-C₄-haloalkoxy and C₁-C₄-alkylthio;
R² and R³ independently of one another are halogen, C₁-C₄-alkyl, C₁-C₄-haloalkyl, C₁-C₄-alkoxy or C₁-C₄-haloalkoxy;
Z is H or R⁴-(CO)- where
R⁴ is C₁-C₆-alkyl or C₂-C₆-alkenyl, it being possible for these groups to be partially or fully halogenated and/or to have attached to them one of the following radicals: C₁-C₄-alkoxy, C₁-C₄-haloalkoxy, C₁-C₄-alkylthio, C₃-C₇-cyclo-alkyl, C₅-C₇-cycloalkenyl or aryl, it being possible for the aromatic radicals, in turn, to
have attached to them one to three of the following groups: nitro, cyano, halogen, C₁-C₄-alkyl, C₁-C₄-haloalkyl, C₁-C₄-alkoxy, C₁-C₄-haloalkoxy and C₁-C₄-alkylthio;
C₃-C₇-cycloalkyl or C₅-C₇-cycloalkenyl, it being possible for these groups to have attached to them one to three of the following radicals: halogen, C₁-C₄-alkyl, C₁-C₄-haloalkyl and C₁-C₄-alkoxy;
aryl which can be partially or fully halogenated and/or can have attached to it one to three of the following radicals: nitro, cyano, C₁-C₄-alkyl, C₁-C₄-haloalkyl, C₁-C₄-alkoxy, C₁-C₄-haloalkoxy and C₁-C₄-alkylthio;
OR⁵ or NR⁶R⁷ where
R⁵ is C₁-C₆-alkyl or C₂-C₆-alkenyl, it being possible for these groups to be partially or fully halogenated and/or to have attached to them one of the following radicals: C₁-C₄-alkoxy, C₁-C₄-haloalkoxy, C₁-C₄-alkyl-thio, C₃-C₇-cycloalkyl, C₅-C₇-cycloalkenyl or aryl, it being possible for the aromatic radicals, in turn, to have attached to them one to three of the following groups: nitro, cyano, halogen, C₁-C₄-alkyl, C₁-C₄-haloalkyl, C₁-C₄-alkoxy, C₁-C₄-haloalkoxy and C₁-C₄-alkylthio;
C₃-C₇-cycloalkyl or C₅-C₇-cycloalkenyl, it being possible for these groups to have attached to them one to three of the follow-ing radicals: halogen, C₁-C₄-alkyl, C₁-C₄-haloalkyl and C₁-C₄-alkoxy;
aryl, which can be partially or fully halogenated and/or can have attached to it one to three of the following radicals: nitro, cyano, C₁-C₄-alkyl, C₁-C₄-haloalkyl, C₁-C₄-alkoxy, C₁-C₄-haloalkoxy and C₁-C₄-alkylthio;
R⁶ is C₁-C₆-alkyl or C₂-C₆-alkenyl, it being possible for these groups to be partially or fully halogenated and/or to have attached to them one of the following radicals: C₁-C₄-alkylthio, C₃-C₇-cycloalkyl, C₅-C₇-cycloalkenyl or aryl, it being possible for the aromatic radicals, in turn, to have attached to them one to three of the following groups: nitro, cyano, halogen, C₁-C₄-alkyl, C₁-C₄-haloalkyl, C₁-C₄-alkoxy, C₁-C₄-haloalkoxy and C₁-C₄-alkylthio;
C₃-C₇-cycloalkyl or C₅-C₇-cycloalkenyl, it being possible for these groups to have attached to them one to three of the following radicals: halogen, C₁-C₄-alkyl, C₁-C₄-haloalkyl and C₁-C₄-alkoxy; aryl which can be partially or fully halo-genated and/or can have attached to it one to three of the following radicals: nitro, cyano, C₁-C₄-alkyl, C₁-C₄-haloalkyl, C₁-C₄-alkoxy, C₁-C₄-haloalkoxy and C₁-C₄-alkylthio; and
R⁷ is hydrogen or C₁-C₆-alkyl,
and
b) an active ingredient of the formula IIA or IIB 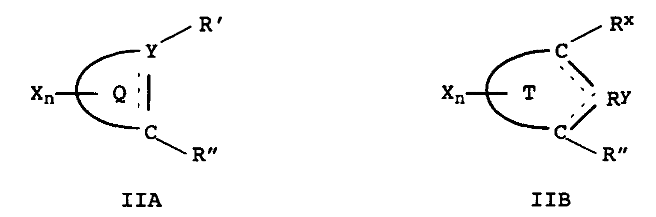 where .... is a double or single bond and the index and the substituents have the following meanings:
R' -C[CO₂CH₃]=CHOCH₃, -C[CO₂CH₃]=NOCH₃, -C[CONHCH₃]=NOCH₃, -C[CO₂CH₃]=CHCH₃, -C[CO₂CH₃]=CHCH₂CH₃, -C[COCH₃]=NOCH₃, -C[COCH₂CH₃]=NOCH₃, -N(OCH₃)-CO₂CH₃, -N(CH₃)-CO₂CH₃, -N(CH₂CH₃)-CO₂CH₃;
R" is a C-organic radical which is bonded directly or via an oxy, mercapto, amino or alkylamino group;
together with a group X and the ring Q or T to which it is bonded is an unsubstituted or substituted bicyclic, partially or fully unsaturated system which, besides carbon ring members, may contain hetero atoms from the group consisting of oxygen, sulfur and nitrogen;
R^{x} -OC[CO₂CH₃]=CHOCH₃, -OC[CO₂CH₃]=CHCH₃, -OC[CO₂CH₃]=CHCH₂CH₃, -SC[CO₂CH₃]=CHOCH₃, -SC[CO₂CH₃]=CHCH₃, -SC[CO₂CH₃]=CHCH₂CH₃, -N(CH₃)C[CO₂CH₃]=CHOCH₃, -N(CH₃)C[CO₂CH₃]=NOCH₃, -CH₂C[CO₂CH₃]=CHOCH₃, -CH₂C[CO₂CH₃]=NOCH₃, -CH₂C[CONHCH₃]=NOCH₃;
R^{y} is oxygen, sulfur, =CH- or =N-;
n is 0, 1, 2 or 3, it being possible for the radicals X to be different when n > 1;
x is cyano, nitro, halogen, C₁-C₄-alkyl, C₁-C₄-haloalkyl, C₁-C₄-alkoxy, C₁-C₄-haloalkoxy, C₁-C₄-alkyl-thio;
in the event that n > 1, a C₃-C₅-alkylene, C₃-C₅-alkenylene, oxy-C₂-C₄-alkylene, oxy-C₁-C₃-alkyleneoxy, oxy-C₂-C₄-alkenylene, oxy-C₂-C₄-alkenyleneoxy or butadienediyl group which is bonded to two adjacent C atoms of the phenyl ring, it being possible for these chains, in turn, to have attached to them one to three of the following radicals: halogen, C₁-C₄-alkyl, C₁-C₄-haloalkyl, C₁-C₄-alkoxy, C₁-C₄-haloalkoxy or C₁-C₄-alkylthio,
Y is =C- or -N-;
Q is phenyl, pyrrolyl, thienyl, furyl, pyrazolyl, imidazolyl, oxazolyl, isoxazolyl, thiazolyl, thiadiazolyl, triazolyl, pyridinyl, 2-pyridinyl, pyrimidinyl and triazinyl; and
T is phenyl, oxazolyl, thiazolyl, thiadiazolyl, oxadiazolyl, pyridinyl, pyrimidinyl and triazinyl,
excluding mixtures in which in formula I
R¹ is 1-methylcyclohexyl
R² and R³ are chlorine and
Z is hydrogen, and
in formula IIA
R' is -C[CONHCH₃] = NOCH₃,
R'' is phenoxy or 2,5-dimethylphenoxymethyl,
n is zero and
Q is phenyl,
in a synergistically active amount.

2. A mixture as claimed in claim 1, wherein, in the compounds I as set forth in claim 1, Z is hydrogen.

3. A mixture as claimed in claim 2, wherein the compound I as set forth in claim 1 is a compound from the table which follows:

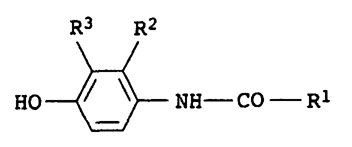

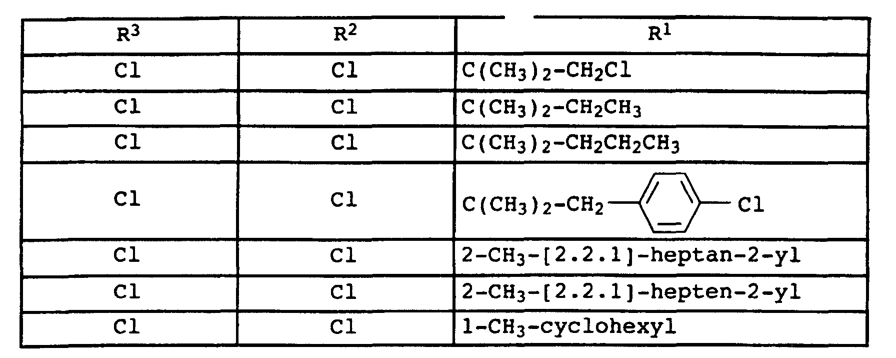

4. A mixture as claimed in any of claims 1 to 3, wherein the compound IIA as set forth in claim 1, where Q is phenyl and n is zero, is a compound from the table which follows:
| R' | R'' |
|---|---|
| -C(CO₂CH₃)=CHOCH₃ | 2-CH₃-C₆H₄-OCH₂ |
| -C(CO₂CH₃)=CHOCH₃ | 2,5-(CH₃)2-C6H₃-OCH₂ |
| -C(CO₂CH₃)=CHOCH₃ | 2-CH₂CH₂CH₃, 6-CF₃-pyrimidin-4-yl |
| -C(CO₂CH₃)=CHOCH₃ | C₆H₅-O |
| -C(CO₂CH₃)=CHOCH₃ | 6-[2-CN-C₆H₄-O]-pyrimidin-4-yl |
| -C(CO₂CH₃)=CHOCH₃ | 3-CF₃-C₆H₄-C(CH₃)=N-OCH₂ |
| -C(CO₂CH₃)=CHOCH₃ | CH₃O-N=C(4-Cl-C₆H₄)-C(CH₃)=N-OCH₂ |
| -C(CO₂CH₃)=CHOCH₃ | 2-CH₃-C₆H₄-OCH₂ |
| -C(CO₂CH₃)=CHOCH₃ | 2.5-(CH₃)₂-C₆H_{S_}OCH₂ |
| -C(CO₂CH₃)=CHOCH₃ | 3-CF₃-C₆H₄-C(CH₃)=N-OCH₂ |
| -C(CO₂CH₃)=CHOCH₃ | 2-CH₃-C₆H₄-OCH₂ |
| -C(CO₂CH₃)=CHOCH₃ | 2.5-(CH₃)₂-C₆H₃-OCH₂ |
| -C(CO₂CH₃)=CHOCH₃ | 1-(4-Cl-C₆H₄)-pyrazol-3-yl-OCH₂ |
| -C(CO₂CH₃)=CHOCH₃ | 3-CF₃-C₆H₄-C(CH₃)=N-OCH₂ |
| -C(CO₂CH₃)=CHOCH₃ | CH₃O-N=C(4-Cl-C₆H₄)-C(CH₃)=N-OCH₂ |
| -N(OCH₃)-CO₂CH₃ | 2-CH₃-C₆H₄-OCH₂ |
| -N(OCH₃)-CO₂CH₃ | 2.5-(CH₃)2-C₆H₄-OCH₂ |
| -N(OCH₃)-CO₂CH₃ | 1-(4-Cl-C₆H₄)-pyrazol-3-yl-OCH₂ |
| -N(OCH₃)-CO₂CH₃ | 3.5-Cl₂-C₆H₃-C(CH₃)=N-OCH₂ |

5. A fungicidal mixture as claimed in any of claims 1 to 4, wherein the weight ratio of the compound I to the compound IIA or IIB is 20:1 to 0.05:1.

6. A method of controlling harmful fungi, which comprises treating the harmful fungi, their environment, or the plants, seeds, soils, areas, materials or spaces to be kept free from them, with a compound of the formula I as set forth in claim 1 and a compound of the formula IIA or IIB as set forth in claim 1.

7. A method as claimed in claim 6, wherein the compound I as set forth in claim 1 and the compound IIA or IIB as set forth in claim 1 are applied simultaneously, namely together or separately, or in succession.

8. A method as claimed in claim 6 or 7, wherein the compound I as set forth in claim 1 is applied in an amount of 0.05 to 1 kg/ha.

9. A method as claimed in any of claims 6 to 8, wherein the compound IIA or IIB as set forth in claim 1 is applied in an amount of 0.01 to 1 kg/ha.

10. The use of the compound I as set forth in any of claims 1 to 3 for the preparation of a fungicidally active synergistic mixture as claimed in any of claims 1 to 4.

## Claims (Claims for the following Contracting State(s): DK, SE)

1. A fungicidal mixture comprising
a) a p-hydroxyaniline derivative of the formula I 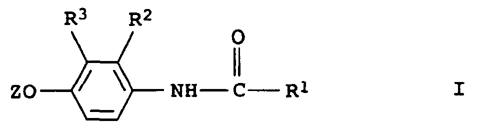 where the radicals have the following meanings:
R¹ is hydrogen, C₁-C₈-alkyl which can be partially or fully halogenated and/or can have attached to it one or two of the following groups: C₁-C₄-alkoxy, C₁-C₄-haloalkoxy, C₁-C₄-alkylthio, C₃-C₇-cycloalkyl, C₅-C₇-cycloalkenyl, it being possible for the cyclic groups, in turn, to have attached to them one to three halogen atoms, C₁-C₃-alkyl groups and/or C₁-C₃-alkoxy groups, and aryl which can be partially or fully halogenated and/or can have attached to it one to three of the following substitutents: nitro, cyano, C₁-C₄-alkyl, C₁-C₄-haloalkyl, C₁-C₄-alkoxy, C₁-C₄-haloalkoxy and C₁-C₄-alkylthio;
C₃-C₆-cycloalkyl or C₃-C₆-cycloalkenyl, it being possible for these radicals to be partially or fully halogenated and/or to have attached to them one to five of the following groups: C₁-C₄-alkyl, C₁-C₄-haloalkyl, C₁-C₄-alkoxy, C₁-C₄-haloalkoxy and aryl which can be partially or fully halogenated and/or can have attached to it one to three of the following substituents: nitro, cyano, C₁-C₄-alkyl, C₁-C₄-haloalkyl, C₁-C₄-alkoxy, C₁-C₄-haloalkoxy and C₁-C₄-alkylthio;
C₆-C₁₅-bicycloalkyl or C₇-C₁₅-bicycloalkenyl, it being possible for these radicals to be partially or fully halogenated and/or to have attached to them one to five of the following groups: C₁-C₄-alkyl, C₁-C₄-haloalkyl, C₁-C₄-alkoxy, C₁-C₄-haloalkoxy and aryl which can be partially or fully halogenated and/ or can have attached to it one to three of the following substituents: nitro, cyano, C₁-C₄-alkyl, C₁-C₄-haloalkyl, C₁-C₄-alkoxy, C₁-C₄-haloalkoxy and C₁-C₄-alkylthio;
R² and R³ independently of one another are halogen, C₁-C₄-alkyl, C₁-C₄-haloalkyl, C₁-C₄-alkoxy or C₁-C₄-haloalkoxy;
Z is H or R⁴-(CO)- where
R⁴ is C₁-C₆-alkyl or C₂-C₆-alkenyl, it being possible for these groups to be partially or fully halogenated and/or to have attached to them one of the following radicals: C₁-C₄-alkoxy, C₁-C₄-haloalkoxy, C₁-C₄-alkylthio, C₃-C₇-cycloalkyl, C₅-C₇-cycloalkenyl or aryl, it being possible for the aromatic radicals, in turn, to have attached to them one to three of the following groups: nitro, cyano, halogen, C₁-C₄-alkyl, C₁-C₄-haloalkyl, C₁-C₄-alkoxy, C₁-C₄-haloalkoxy and C₁-C₄-alkylthio;
C₃-C₇-cycloalkyl or C₅-C₇-cycloalkenyl, it being possible for these groups to have attached to them one to three of the following radicals: halogen, C₁-C₄-alkyl, C₁-C₄-haloalkyl and C₁-C₄-alkoxy;
aryl which can be partially or fully halogenated and/or can have attached to it one to three of the following radicals: nitro, cyano, C₁-C₄-alkyl, C₁-C₄-haloalkyl, C₁-C₄-alkoxy, C₁-C₄-haloalkoxy and C₁-C₄-alkylthio;
OR⁵ or NR⁶R⁷ where
R⁵ is C₁-C₆-alkyl or C₂-C₆-alkenyl, it being possible for these groups to be partially or fully halogenated and/or to have attached to them one of the following radicals:
C₁-C₄-alkoxy, C₁-C₄-haloalkoxy, C₁-C₄-alkylthio, C₃-C₇-cycloalkyl, C₅-C₇-cycloalkenyl or aryl, it being possible for the aromatic radicals, in turn, to have attached to them one to three of the following groups: nitro, cyano, halogen, C₁-C₄-alkyl, C₁-C₄-haloalkyl, C₁-C₄-alkoxy, C₁-C₄-haloalkoxy and C₁-C₄-alkylthio;
C₃-C₇-cycloalkyl or C₅-C₇-cycloalkenyl, it being possible for these groups to have attached to them one to three of the follow-ing radicals: halogen, C₁-C₄-alkyl, C₁-C₄-haloalkyl and C₁-C₄-alkoxy;
aryl, which can be partially or fully halo-genated and/or can have attached to it one to three of the following radicals: nitro, cyano, C₁-C₄-alkyl, C₁-C₄-haloalkyl, C₁-C₄-alkoxy, C₁-C₄-haloalkoxy and C₁-C₄-alkylthio;
R⁶ is C₁-C₆-alkyl or C₂-C₆-alkenyl, it being possible for these groups to be partially or fully halogenated and/or to have attached to them one of the following radicals:
C₁-C₄-alkylthio, C₃-C₇-cycloalkyl, C₅-C₇-cycloalkenyl or aryl, it being possible for the aromatic radicals, in turn, to have attached to them one to three of the following groups: nitro, cyano, halogen, C₁-C₄-alkyl, C₁-C₄-haloalkyl, C₁-C₄-alkoxy, C₁-C₄-haloalkoxy and C₁-C₄-alkylthio;
C₃-C₇-cycloalkyl or C₅-C₇-cycloalkenyl, it being possible for these groups to have attached to them one to three of the following radicals: halogen, C₁-C₄-alkyl, C₁-C₄-haloalkyl and C₁-C₄-alkoxy;
aryl which can be partially or fully halo-genated and/or can have attached to it one to three of the following radicals: nitro, cyano, C₁-C₄-alkyl, C₁-C₄-haloalkyly C₁-C₄-alkoxy, C₁-C₄-haloalkoxy and C₁-C₄-alkylthio; and
R⁷ is hydrogen or C₁-C₆-alkyl,
and
b) an active ingredient of the formula IIA or IIB 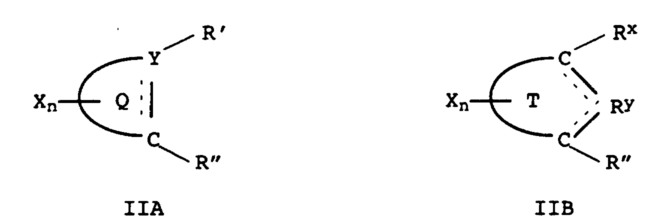 where .... is a double or single bond and the index and the substituents have the following meanings:
R' -C[CO₂CH₃]=CHOCH₃, -C[CO₂CH₃]=NOCH₃, -C[CONHCH₃]=NOCH₃, -C[CO₂CH₃]=CHCH₃, -C[CO₂CH₃]=CHCH₂CH₃, -C[COCH₃]=NOCH₃, -C[COCH₂CH₃]=NOCH₃, -N(OCH₃)-CO₂CH₃, -N(CH₃)-CO₂CH₃, -N(CH₂CH₃)-CO₂CH₃;
R" is a C-organic radical which is bonded directly or via an oxy, mercapto, amino or alkylamino group;
together with a group X and the ring Q or T to which it is bonded is an unsubstituted or substituted bicyclic, partially or fully unsaturated system which, besides carbon ring members, may contain hetero atoms from the group consisting of oxygen, sulfur and nitrogen;
R^{x} -OC[CO₂CH₃]=CHOCH₃, -OC[CO₂CH₃]=CHCH₃, -OC[CO₂CH₃]=CHCH₂CH₃, -SC[CO₂CH₃]=CHOCH₃, -SC[CO₂CH₃]=CHCH₃, -SC[CO₂CH₃]=CHCH₂CH₃, -N(CH₃)C[CO₂CH₃]=CHOCH₃, -N(CH₃)C[CO₂CH₃]=NOCH₃, -CH₂C[CO₂CH₃]=CHOCH₃, -CH₂C[CO₂CH₃]=NOCH₃, -CH₂C[CONHCH₃]=NOCH₃;
R^{y} is oxygen, sulfur, =CH- or =N-;
n is 0, 1, 2 or 3, it being possible for the radicals X to be different when n > 1;
x is cyano, nitro, halogen, C₁-C₄-alkyl, C₁-C₄-haloalkyl, C₁-C₄-alkoxy, C₁-C₄-haloalkoxy, C₁-C₄-alkylthio;
in the event that n > 1, a C₃-C₅-alkylene, C₃-C₅-alkenylene, oxy-C₂-C₄-alkylene, oxy-C₁-C₃-alkyleneoxy, oxy-C₂-C₄-alkenylene, oxy-C₂-C₄-alkenyleneoxy or butadienediyl group which is bonded to two adjacent C atoms of the phenyl ring, it being possible for these chains, in turn, to have attached to them one to three of the following radicals: halogen, C₁-C₄-alkyl, C₁-C₄-haloalkyl, C₁-C₄-alkoxy, C₁-C₄-haloalkoxy or C₁-C₄-alkylthio,
Y is =C- or -N-;
Q is phenyl, pyrrolyl, thienyl, furyl, pyrazolyl, imidazolyl, oxazolyl, isoxazolyl, thiazolyl, thiadiazolyl, triazolyl, pyridinyl, 2-pyridinyl, pyrimidinyl and triazinyl; and
T is phenyl, oxazolyl, thiazolyl, thiadiazolyl, oxadiazolyl, pyridinyl, pyrimidinyl and triazinyl,
in a synergistically active amount.

2. A mixture as claimed in claim 1, wherein, in the compounds I as set forth in claim 1, Z is hydrogen.

3. A mixture as claimed in claim 2, wherein the compound I as set forth in claim 1 is a compound from the table which follows:

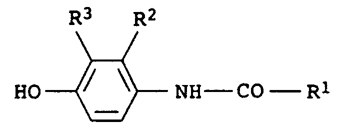

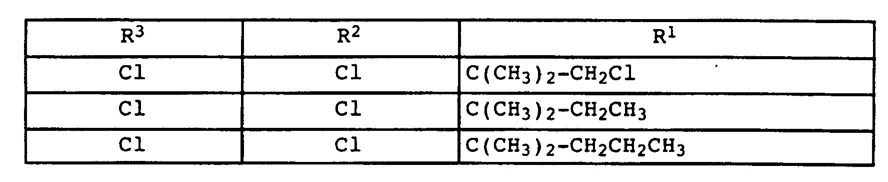

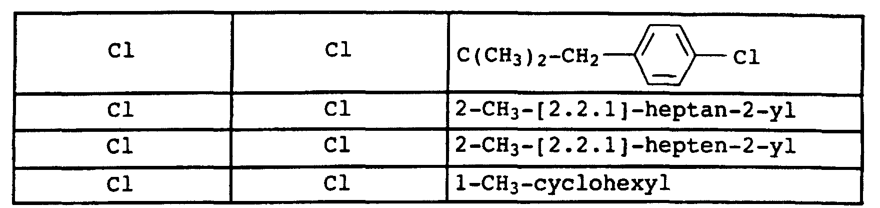

4. A mixture as claimed in any of claims 1 to 3, wherein the compound IIA as set forth in claim 1, where Q is phenyl and n is zero, is a compound from the table which follows:
| R' | R'' |
|---|---|
| -C(CO₂CH₃)=CHOCH₃ | 2-CH₃-C₆H₄-OCH₂ |
| -C(CO₂CH₃)=CHOCH₃ | 2,5-(CH₃)2-C6H₃-OCH₂ |
| -C(CO₂CH₃)=CHOCH₃ | 2-CH₂CH₂CH₃, 6-CF₃-pyrimidin-4-yl |
| -C(CO₂CH₃)=CHOCH₃ | C₆H₅-O |
| -C(CO₂CH₃)=CHOCH₃ | 6-[2-CN-C₆H₄-O]-pyrimidin-4-yl |
| -C(CO₂CH₃)=CHOCH₃ | 3-CF₃-C₆H₄-C(CH₃)=N-OCH₂ |
| -C(CO₂CH₃)=CHOCH₃ | CH₃O-N=C(4-Cl-C₆H₄)-C(CH₃)=N-OCH₂ |
| -C(CO₂CH₃)=CHOCH₃ | 2-CH₃-C₆H₄-OCH₂ |
| -C(CO₂CH₃)=CHOCH₃ | 2.5-(CH₃)₂-C₆H₃-OCH₂ |
| -C(CO₂CH₃)=CHOCH₃ | 3-CF₃-C₆H₄-C(CH₃)=N-OCH₂ |
| -C(CO₂CH₃)=CHOCH₃ | 2-CH₃-C₆H₄-OCH₂ |
| -C(CO₂CH₃)=CHOCH₃ | 2.5-(CH₃)₂-C₆H₃-OCH₂ |
| -C(CO₂CH₃)=CHOCH₃ | 1-(4-Cl-C₆H₄)-pyrazol-3-yl-OCH₂ |
| -C(CO₂CH₃)=CHOCH₃ | 3-CF₃-C₆H₄-C(CH₃)=N-OCH₂ |
| -C(CO₂CH₃)=CHOCH₃ | CH₃O-N=C(4-Cl-C₆H₄)-C(CH₃)=N-OCH₂ |
| -N(OCH₃)-CO₂CH₃ | 2-CH₃-C₆H₄-OCH₂ |
| -N(OCH₃)-CO₂CH₃ | 2.5-(CH₃)2-C₆H₄-OCH₂ |
| -N(OCH₃)-CO₂CH₃ | 1-(4-Cl-C₆H₄)-pyrazol-3-yl-OCH₂ |
| -N(OCH₃)-CO₂CH₃ | 3.5-Cl₂-C₆H₃-C(CH₃)=N-OCH₂ |

5. A fungicidal mixture as claimed in any of claims 1 to 4, wherein the weight ratio of the compound I to the compound IIA or IIB is 20:1 to 0.05:1.

6. A method of controlling harmful fungi, which comprises treating the harmful fungi, their environment, or the plants, seeds, soils, areas, materials or spaces to be kept free from them, with a compound of the formula I as set forth in claim 1 and a compound of the formula IIA or IIB as set forth in claim 1.

7. A method as claimed in claim 6, wherein the compound I as set forth in claim 1 and the compound IIA or IIB as set forth in claim 1 are applied simultaneously, namely together or separately, or in succession.

8. A method as claimed in claim 6 or 7, wherein the compound I as set forth in claim 1 is applied in an amount of 0.05 to 1 kg/ha.

9. A method as claimed in any of claims 6 to 8, wherein the compound IIA or IIB as set forth in claim 1 is applied in an amount of 0.01 to 1 kg/ha.

10. The use of the compound I as set forth in any of claims 1 to 3 for the preparation of a fungicidally active synergistic mixture as claimed in any of claims 1 to 4.

## Revendications (Revendications pour l'(les) Etat(s) contractant(s) suivant(s): AT, BE, CH, DE, ES, FR, GB, IT, NL, PT)

1. Mélange fongicide contenant
a) un dérivé de la p-hydroxyaniline de formule I 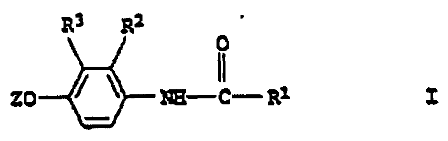 dans laquelle les symboles ont les significations suivantes :
R¹ : l'hydrogène, un groupe alkyle en C1-C8 qui peut être halogéné en totalité ou en partie et/ou peut porter un ou deux des substituants suivants : alcoxy en C1-C4, halogénoalcoxy en C1-C4, alkylthio en C1-C4, cycloalkyle en C3-C7, cycloalcényle en C5-C7, les groupes cycliques pouvant eux-mêmes porter un à trois atomes d'halogènes, groupes alkyle en C1-C3 et/ou groupes alcoxy en C1-C3, et aryle, qui peut être halogéné en totalité ou en partie et/ou peut porter un à trois des substituants suivants : nitro, cyano, alkyle en C1-C4, halogénoalkyle en C1-C4, alcoxy en C1-C4, halogénoalcoxy en C1-C4 et alkylthio en C1-C4 ;
un groupe cycloalkyle en C3-C6 ou cycloalcényle en C3-C6, ces groupes pouvant être halogénés en totalité ou en partie et/ou pouvant porter un à cinq des substituants suivants : alkyle en C1-C4, halogénoalcoxy en C1-C4, alcoxy en C1-C4, halogénoalcoxy en C1-C4 et aryle, lequel peut être halogénés en totalité ou en partie et/ou peut porter un à trois des substituants suivants : nitro, cyano, alkyle en C1-C4, halogénoalkyle en C1-C4, alcoxy en C1-C4, halogénoalcoxy en C1-C4 et alkylthio en C1-C4 ;
un groupe bicycloalkyle en C6-C15 ou bicycloalcényle en C7-C15, ces groupes pouvant être halogénés en totalité ou en partie et/ou pouvant porter un à cinq des substituants suivants : alkyle en C1-C4, halogénoalcoxy en C1-C4, alcoxy en C1-C4, halogénoalcoxy en C1-C4 et aryle, lequel peut être halogéné en totalité ou en partie et/ou peut porter un à trois des substituants suivants : nitro, alkyle en C1-C4, halogénoalkyle en C1-C4, alcoxy en C1-C4, halogénoalcoxy en C1-C4 et alkylthio en C1-C4 ;
R² et R³ représentent chacun, indépendamment l'un de l'autre, un halogène, un groupe alkyle en C1-C4, halogénoalkyle en C1-C4, alcoxy en C1-C4 ou halogénoalcoxy en C1-C4 ;
Z représente H ou R⁴-(CO)- dans lequel
R⁴ représente un groupe alkyle en C1-C6 ou alcényle en C2-C6, ces groupes pouvant être halogénés en totalité ou en partie et/ou pouvant porter un des substituants suivants : alcoxy en C1-C4, halogénoalcoxy en C1-C4, alkylthio en C1-C4, cycloalkyle en C3-C7, cycloalcényle en C5-C7 ou aryle, les radicaux aromatiques pouvant eux-mêmes porter un à trois des substituants suivants : nitro, cyano, halogéno, alkyle en C1-C4, halogénoalkyle en C1-C4, alcoxy en C1-C4, halogénoalcoxy en C1-C4 et alkylthio en C1-C4 ;
un groupe cycloalkyle en C3-C7 ou cycloalcényle en C5-C7, ces groupes pouvant porter un à trois des substituants suivants : halogéno, alkyle en C1-C4, halogénoalkyle en C1-C4 et alcoxy en C1-C4 ;
un groupe aryle qui peut être halogéné en totalité ou en partie et/ou qui peut porter un à trois des substituants suivants : nitro, cyano, alkyle en C1-C4, halogénoalkyle en C1-C4, alcoxy en C1-C4, halogénoalcoxy en C1-C4 et alkylthio en C1-C4 ;
un groupe OR⁵ ou NR⁶R⁷ dans lequel
R⁵ représente un groupe alkyle en C1-C6 ou alcényle en C2-C6, ces groupes pouvant être halogénés en totalité ou en partie et/ou pouvant porter un des substituants suivants alcoxy en C1-C4, halogénoalcoxy en C1-C4, alkylthio en C1-C4, cycloalkyle en C3-C7, cycloalcényle en C5-C7 ou aryle, les radicaux aromatiques pouvant eux-mêmes porter un à trois des substituants suivants nitro, cyano, halogéno, alkyle en C1-C4, halogénoalkyle en C1-C4, alcoxy en C1-C4, halogénoalcoxy en C1-C4 et alkylthio en C1-C4 ;
un groupe cycloalkyle en C3-C7 ou cycloalcényle en C5-C7, ces groupes pouvant porter un à trois des substituants suivants : halogéno, alkyle en C1-C4, halogénoalkyle en C1-C4 et alcoxy en C1-C4 ;
un groupe aryle qui peut être halogéné en totalité ou en partie et/ou peut porter un à trois des substituants suivants : nitro, cyano, alkyle en C1-C4, halogénoalkyle en C1-C4, alcoxy en C1-C4, halogénoalcoxy en C1-C4 et alkylthio en C1-C4 ;
R⁶ représente un groupe alkyle en C1-C6 ou alcényle en C2-C6, ces groupes pouvant être halogénés en totalité ou en partie et/ou pouvant porter un des substituants suivants : alkylthio en C1-C4, cycloalkyle en C3-C7, cycloalcényle en C5-C7 ou aryle, les radicaux aromatiques pouvant eux-mêmes porter un à trois des substituants suivants : nitro, cyano, halogéno, alkyle en C1-C4, halogénoalkyle en C1-C4, alcoxy en C1-C4, halogénoalcoxy en C1-C4 et alkylthio en C1-C4 ;
un groupe cycloalkyle en C3-C7 ou cycloalcényle en C5-C7, ces groupes pouvant porter un à trois des substituants suivants : halogéno, alkyle en C1-C4, halogénoalkyle en C1-C4 et alcoxy en C1-C4 ;
un groupe aryle qui peut être halogéné en totalité ou en partie et/ou peut porter un à trois des substituants suivants : nitro, cyano, alkyle en C1-C4, halogénoalkyle en C1-C4, alcoxy en C1-C4, halogénoalcoxy en C1-C4 et alkylthio en C1-C4 ;
et
R⁷ représente l'hydrogène ou un groupe alkyle en C1-C6,
et
a) une substance active de formule IIA ou IIB 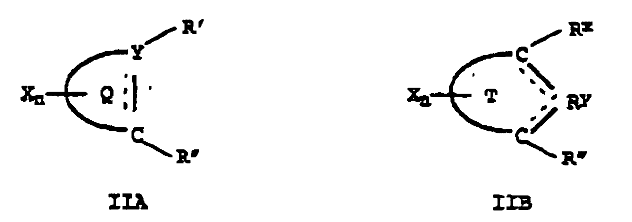 dans lesquelles .... représente une double liaison ou une liaison simple et l'indice et les symboles ont les significations suivantes :
R': : -C[CO₂CH₃]=CHOCH₃, -C[CO₂CH₃]=NOCH₃, -C[CONHCH₃]=NOCH₃, -C[CO₂CH₃]=CHCH₃, -C[CO₂CH₃]=CHCH₂CH₃,-C[OCH₃]-CO₂CH₃, -C[COCH₂CH₃]=NOCH₃, -N(OCH₃)-CO₂CH₃, -N(CH₃)-CO₂CH₃, -N(CH₂CH₃)-CO₂CH₃ ;
R": un radical organique carboné relié directement ou par l'intermédiaire d'un groupe oxy, mercapto, amino ou alkylamino ; avec un groupe X et le cycle Q ou T auquel ils sont reliés, un système bicyclique partiellement ou totalement insaturé, éventuellement substitué, et qui, avec des chaînons carbonés, peut contenir des hétéroatomes du groupe consistant en l'oxygène, le soufre et l'azote ;
R^{x}: -OC[CO₂CH₃]=CHOCH₃, -OC[CO₂CH₃]=CHCH₃, -OC[CO₂CH₃]=CHCH₂CH₃,-SC[CO₂CH₃]=CHOCH₃, -SC[CO₂CH₃]=CHCH₃,-SC[CO₂CH₃]=CHCH₂CH₃, -N(CH₃)C[CO₂CH₃]=CHOCH₃, -N(CH₃)C[CO₂CH₃]=NOCH₃, -CH₂C[CO₂CH₃]=CHOCH₃,-CH₂C[CO₂CH₃]=NOCH₃, -CH₂C[CONHCH₃]=NOCH₃ ;
R^{y}: l'oxygène, le soufre, =CH- ou =N- ;
n : 0, 1, 2 ou 3, les substituants X pouvant être différents lorsque n est supérieur à 1 ;
X : un groupe cyano, nitro, un halogène, un groupe alkyle en C1-C4, halogénoalkyle en C1-C4, alcoxy en C1-C4, halogénoalcoxy en C1-C4, alkylthio en C1-C4 ;
dans les cas où n est supérieur à 1, un groupe alkylène en C3-C5, alcénylène en C3-C5, oxy-alkylène en C2-C4, oxy-alkylène en C1-C3-oxy, oxy-alcénylène en C2-C4, oxy-alcénylène en C2-C4-oxy ou butadiènediyle relié à deux atomes de carbone voisins du cycle phényle, ces chaînes pouvant elles-mêmes porter un à trois des substituants suivants : halogéno, alkyle en C1-C4, halogénoalkyle en C1-C4, alcoxy en C1-C4, halogénoalcoxy en C1-C4 ou alkylthio en C1-C4,
Y: =C- ou-N-;
Q : un groupe phényle, pyrrolyle, thiényle, furyle, pyrazolyle, imidazolyle, oxazolyle, isoxazolyle, thiazolyle, thiadiazolyle, triazolyle, pyridinyle, 2-pyridinyle, pyrimidinyle et triazinyle ;
T : un groupe phényle, oxazolyle, thiazolyle, thiadiazolyle, oxadiazolyle, pyridinyle, pyrimidinyle et triazinyle,
à l'exception des mélanges pour lesquels, dans la formule I
R¹ = 1-méthylcyclohexyle,
R² et R³ = chlore et
Z = hydrogène et
dans la formule IIA
R' = -C[CONHCH₃]=NOCH₃,
R'' = phénoxy ou 2,5-diméthylphénoxyméthyle,
N = zéro et
Q = phényle,
en quantité synergétique efficace.

2. Mélange selon la revendication 1, caractérisé par le fait que, dans les composés 1 selon la revendication 1, Z représente l'hydrogène.

3. Mélange selon la revendication 2, caractérisé par le fait que le composé I de la revendication 1 est un composé du tableau ci-après :

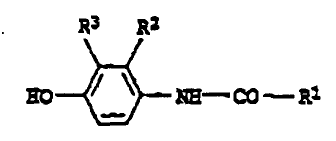

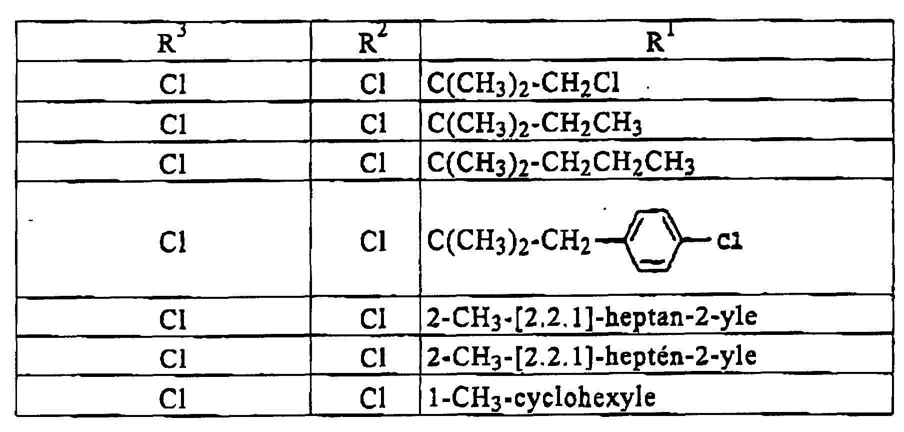

4. Mélanges selon l'une des revendications 1 et 3, caractérisé par le fait que le composé IIA selon la revendication 1 dans lequel Q représente un groupe phényle et n est égal à 0, est un composé du tableau ci-après :
| R' | R" |
|---|---|
| -C(CO₂CH₃)=CHOCH₃ | 2-CH₃-C₆H₄-OCH₂ |
| -C(CO₂CH₃)-CHOCH₃ | 2,5-(CH₃)₂-C₆H₃-OCH₂ |
| -C(CO₂CH₃)=CHOCH₃ | 2-CH₂CH₂CH₃, 6-CF₃-pyrimidin-4-yle |
| -C(CO₂CH₃)-CHOCH₃ | C₆H₅-O |
| -C(CO₂CH₃)=CHOCH₃ | 6-[2-CN-C₆H₄-O]-pyrimidin-4-yle |
| -C(CO₂CH₃)=CHOCH₃ | 3-CF₃-C₆H₄-C(CH₃)=N-OCH₂ |
| -C(CO₂CH₃)=CHOCH₃ | CH₃O-N=C(4-Cl-C₆H₄)-C(CH₃)=N-OCH₂ |
| -C(CO₂CH₃)=NOCH₃ | 2-CH₃-C₆H₄-OCH₂ |
| -C(CO₂CH₃)=NOCH₃ | 2,5-(CH₃)2-C₆H₃-OCH₂ |
| -C(CO₂CH₃)=NOCH₃ | 3-CF₃-C₆H₄-C(CH₃)=N-OCH₂ |
| -C(CONHCH₃)=NOCH₃ | 2-CH₃-C₆H₄-OCH₂ |
| -C(CONHCH₃)=NOCH₃ | 2,5-(CH₃)₂-C₆H₃-OCH₂ |
| -C(CONHCH₃)=NOCH₃ | 1-(4-Cl-C₆H₄)-pyrazol-3-yl-OCH₂ |
| -C(CONHCH₃)=NOCH₃ | 3-CF₃-C₆H₄-C(CH₃)=N-OCH₂ |
| -C(CONHCH₃)=NOCH₃ | CH₃O-N=C(4-Cl-C₆H₄)-C(CH₃)=N-OCH₂ |
| -N(OCH₃)-CO₂CH₃ | 2-CH₃-C₆H₄-OCH₂ |
| -N(OCH₃)-CO₂CH₃ | 2,5-(CH₃)₂-C₆H₄-OCH₂ |
| -N(OCH₃)-CO₂CH₃ | 1-(4-Cl-C₆H₄)-pyrazol-3-yl-OCH₂ |
| -N(OCH₃)-CO₂CH₃ | 3,5-Cl₂-C₆H₃-C(CH₃)=N-OCH₂ |

5. Mélange fongicide selon l'une des revendications 1 à 4, caractérisé par le fait que les proportions relatives en poids entre le composé I et le composé IIA ou IIB vont de 20 : 1 à 0,05 : 1.

6. Procédé pour combattre les mycètes nuisibles caractérisé par le fait que l'on traite les mycètes nuisibles, leur habitat ou les végétaux, semences, sols, aires, matériaux ou locaux qu'on veut protéger contre les mycètes par un composé de formule I selon la revendication 1 et un composé de formule IIA ou IIB selon la revendication 1.

7. Procédé selon la revendication 6, caractérisé par le fait que le composé I de la revendication 1 et le composé IIA ou IIB de la revendication 1 sont appliqués en même temps, ensemble ou séparément, ou successivement.

8. Procédé selon la revendication 6 ou 7, caractérisé par le fait que l'on applique le composé I selon la revendication 1 en quantité de 0,05 à 1 kg/ha.

9. Procédé selon les revendications 6 à 8, caractérisé par le fait que l'on applique les composés IIA ou IIB selon la revendication 1 en quantité de 0,01 à 1 kg/ha.

10. Utilisation du composé I selon les revendications 1 à 3, pour la préparation d'un mélange à activité fongicide synergétique selon les revendications 1 à 4.

## Revendications (Revendications pour l'(les) Etat(s) contractant(s) suivant(s): DK, SE)

1. Mélange fongicide contenant
a) un dérivé de la p-hydroxyaniline répondant à la formule I 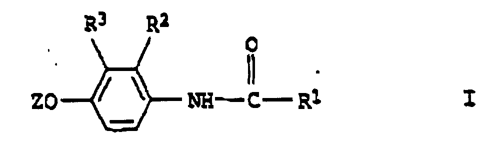 dans laquelle les symboles ont les significations suivantes :
R¹ : l'hydrogène, un groupe alkyle en C1-C8 qui peut être halogéné en totalité ou en partie et/ou peut porter un ou deux des substituants suivants : alcoxy en C1-C4, halogénoalcoxy en C1-C4, alkylthio en C1-C4, cycloalkyle en C3-C7, cycloalcényle en C5-C7, les groupes cycliques pouvant eux-mêmes porter un à trois atomes d'halogènes, groupes alkyle en C1-C3 et/ou groupes alcoxy en C1-C3, et aryle, qui peut être halogéné en totalité ou en partie et/ou peut porter un à trois des substituants suivants : nitro, cyano, alkyle en C1-C4, halogénoalkyle en C1-C4, alcoxy en C1-C4, halogénoalcoxy en C1-C4 et alkylthio en C1-C4 ;
un groupe cycloalkyle en C3-C6 ou cycloalcényle en C3-C6, ces groupes pouvant être halogénés en totalité ou en partie et/ou pouvant porter un à cinq des substituants suivants : alkyle en C1-C4, halogénoalcoxy en C1-C4, alcoxy en C1-C4, halogénoalcoxy en C1-C4 et aryle, lequel peut être halogénés en totalité ou en partie et/ou peut porter un à trois des substituants suivants ; nitro, cyano, alkyle en C1-C4, halogénoalkyle en C1-C4, alcoxy en C1-C4, halogénoalcoxy en C1-C4 et alkylthio en C1-C4 ;
un groupe bicycloalkyle en C6-C15 ou bicycloalcényle en C7-C15, ces groupes pouvant être halogénés en totalité ou en partie et/ou pouvant porter un à cinq des substituants suivants : alkyle en C1-C4, halogénoalcoxy en C1-C4, alcoxy en C1-C4, halogénoalcoxy en C1-C4 et aryle, lequel peut être halogéné en totalité ou en partie et/ou peut porter un à trois des substituants suivants : nitro, alkyle en C1-C4, halogénoalkyle en C1-C4, alcoxy en C1-C4, halogénoalcoxy en C1-C4 et alkylthio en C1-C4 ;
R² et R³ représentent chacun, indépendamment l'un de l'autre, un halogène, un groupe alkyle en C1-C4, halogénoalkyle en C1-C4, alcoxy en C1-C4 ou halogénoalcoxy en C1-C4 ;
Z représente H ou R⁴-(CO)- dans lequel
R⁴ représente un groupe alkyle en C1-C6 ou alcényle en C2-C6, ces groupes pouvant être halogénés en totalité ou en partie et/ou pouvant porter un des substituants suivants : alcoxy en C1-C4, halogénoalcoxy en C1-C4, alkylthio en C1-C4, cycloalkyle en C3-C7, cycloalcényle en C5-C7 ou aryle, les radicaux aromatiques pouvant eux-mêmes porter un à trois des substituants suivants : nitro, cyano, halogéno, alkyle en C1-C4, halogénoalkyle en C1-C4, alcoxy en C1-C4, halogénoalcoxy en C1-C4 et alkylthio en C1-C4 ;
un groupe cycloalkyle en C3-C7 ou cycloalcényle en C5-C7, ces groupes pouvant porter un à trois des substituants suivants : halogéno, alkyle en C1-C4, halogénoalkyle en C1-C4 et alcoxy en C1-C4 ;
un groupe aryle qui peut être halogéné en totalité ou en partie et/ou qui peut porter un à trois des substituants suivants : nitro, cyano, alkyle en C1-C4, halogénoalkyle en C1-C4, alcoxy en C1-C4, halogénoalcoxy en C1-C4 et alkylthio en C1-C4 ;
un groupe OR⁵ ou NR⁶R⁷ dans lequel
R⁵ représente un groupe alkyle en C1-C6 ou alcényle en C2-C6, ces groupes pouvant être halogénés en totalité ou en partie et/ou pouvant porter un des substituants suivants : alcoxy en C1-C4, halogénoalcoxy en C1-C4, alkylthio en C1-C4, cycloalkyle en C3-C7, cycloalcényle en C5-C7 ou aryle, les radicaux aromatiques pouvant eux-mêmes porter un à trois des substituants suivants : nitro, cyano, halogéno, alkyle en C1-C4, halogénoalkyle en C1-C4, alcoxy en C1-C4, halogénoalcoxy en C1-C4 et alkylthio en C1-C4 ;
un groupe cycloalkyle en C3-C7 ou cycloalcényle en C5-C7, ces groupes pouvant porter un à trois des substituants suivants : halogéno, alkyle en C1-C4, halogénoalkyle en C1-C4 et alcoxy en C1-C4 ;
un groupe aryle qui peut être halogéné en totalité ou en partie et/ou peut porter un à trois des substituants suivants : nitro, cyano, alkyle en C1-C4, halogénoalkyle en C1-C4, alcoxy en C1-C4, halogénoalcoxy en C1-C4 et alkylthio en C1-C4 ;
R⁶ représente un groupe alkyle en C1-C6 ou alcényle en C2-C6, ces groupes pouvant être halogénés en totalité ou en partie et/ou pouvant porter un des substituants suivants : alkylthio en C1-C4, cycloalkyle en C3-C7, cycloalcényle en C5-C7 ou aryle, les radicaux aromatiques pouvant eux-mêmes porter un à trois des substituants suivants : nitro, cyano, halogéno, alkyle en C1-C4, halogénoalkyle en C1-C4, alcoxy en C1-C4, halogénoalcoxy en C1-C4 et alkylthio en C1-C4 ;
un groupe cycloalkyle en C3-C7 ou cycloalcényle en C5-C7, ces groupes pouvant porter un à trois des substituants suivants : halogéno, alkyle en C1-C4, halogénoalkyle en C1-C4 et alcoxy en C1-C4 ;
un groupe aryle qui peut être halogéné en totalité ou en partie et/ou peut porter un à trois des substituants suivants : nitro, cyano, alkyle en C1-C4, halogénoalkyle en C1-C4, alcoxy en C1-C4, halogénoalcoxy en C1-C4 et alkylthio en C1-C4 ;
et
R⁷ représente l'hydrogène ou un groupe alkyle en C1-C6,
et
b) une substance active de formule IIA ou IIB 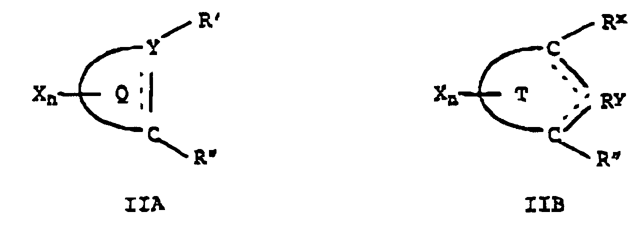 dans lesquelles .... représente une double liaison ou une liaison simple et l'indice et les symboles ont les significations suivantes :
R': -C[CO₂CH₃]-CHOCH₃, -C[CO₂CH₃]=NOCH₃, -C[CONHCH₃]=NOCH₃, -C[CO₂CH₃]=CHCH₃, -C[CO₂CH₃]=CHCH₂CH₃, -C[COCH₃]=NOCH₃, -C[COCH₂CH₃]=NOCH₃, -N(OCH₃)-CO₂CH₃, -N(CH₃)-CO₂CH₃, -N(CH₂CH₃)-CO₂CH₃;
R": un radical organique carboné relié directement ou par l'intermédiaire d'un groupe oxy, mercapto, amino ou alkylamino ; avec un groupe X et le cycle Q ou T auquel ils sont reliés, un système bicyclique partiellement ou totalement insaturé, éventuellement substitué, et qui, avec des chaînons carbonés, peut contenir des hétéroatomes du groupe consistant en l'oxygène, le soufre et l'azote ;
R^{x}: -OC[CO₂CH₃]=CHOCH₃, -OC[CO₂CH₃]=CHCH₃, -OC[CO₂CH₃]=CHCH₂CH₃, -SC[CO₂CH₃]=CHOCH₃, -SC[CO₂CH₃]=CHCH₃, -SC[CO₂CH₃]=CHCH₂CH₃, -N(CH₃)C[CO₂CH₃]=CHOCH₃, -N(CH₃)C[CO₂CH₃]=NOCH₃, -CH₂C[CO₂CH₃]=CHOCH₃, -CH₂C[CO₂CH₃]=NOCH₃, -CH₂C[CONHCH₃]=NOCH₃ ;
R^{y}: l'oxygène, le soufre, =CH- ou =N- ;
n : 0, 1, 2 ou 3, les substituants X pouvant être différents lorsque n est supérieur à 1 ;
X : un groupe cyano, nitro, un halogène, un groupe alkyle en C1-C4, halogénoalkyle en C1-C4, alcoxy en C1-C4, halogénoalcoxy en C1-C4, alkylthio en C1-C4;
dans les cas où n est supérieur à 1, un groupe alkylène en C3-C5, alcénylène en C3-C5, oxy-alkylène en C2-C4, oxy-alkylène en C1-C3-oxy, oxy-alcénylène en C2-C4, oxy-alcénylène en C2-C4-oxy ou butadiènediyle relié à deux atomes de carbone voisins du cycle phényle, ces chaînes pouvant elles-mêmes porter un à trois des substituants suivants : halogéno, alkyle en C1-C4, halogénoalkyle en C1-C4, alcoxy en C1-C4, halogénoalcoxy en C1-C4 ou alkylthio en C1-C4,
Y : =C- ou -N- ;
Q : un groupe phényle, pyrrolyle, thiényle, furyle, pyrazolyle, imidazolyle, oxazolyle, isoxazolyle, thiazolyle, thiadiazolyle, triazolyle, pyridinyle, 2-pyridinyle, pyrimidinyle et triazinyle ;
T : un groupe phényle, oxazolyle, thiazolyle, thiadiazolyle, oxadiazolyle, pyridinyle, pyrimidinyle et triazinyle,
en quantité synergétique efficace.

2. Mélange selon la revendication 1, caractérisé par le fait que, dans les composés I selon la revendication 1, Z représente l'hydrogène.

3. Mélange selon la revendication 2, caractérisé par le fait que le composé I de la revendication 1 est un composé du tableau ci-après :

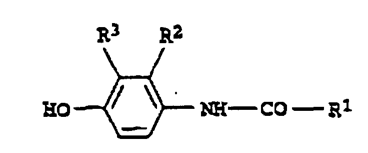

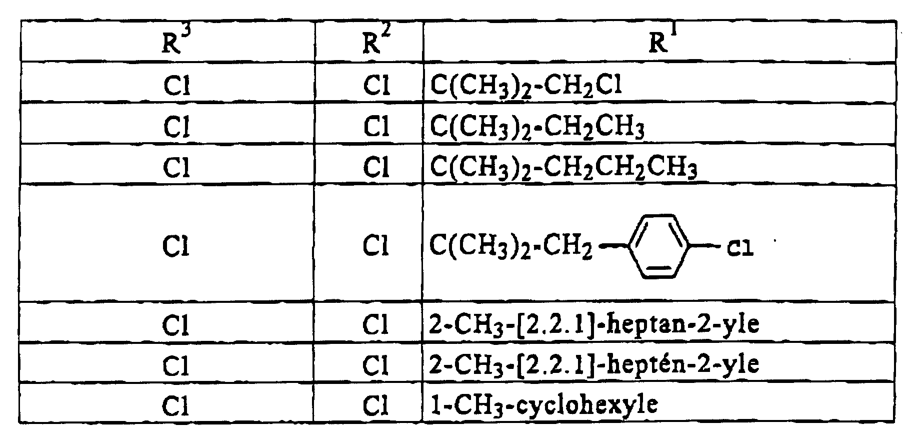

4. Mélanges selon l'une des revendications 1 à 3, caractérisés par le fait que le composé IIA de la revendication 1 pour lequel Q représente un groupe phényle et n est égal à 0 est un composé du tableau ci-après :
| R' | R'' |
|---|---|
| -C(CO₂CH₃)=CHOCH₃ | 2-CH₃-C₆H₄-OCH₂ |
| -C(CO₂CH₃)=CHOCH₃ | 2,5-(CH₃)₂-C₆H₃-OCH₂ |
| -C(CO₂CH₃)=CHOCH₃ | 2-CH₂CH₂CH₃, 6-CF₃-pyrimidin-4-yl-OCH₂ |
| -C(CO₂CH₃)=CHOCH₃ | C₆H₅-O |
| -C(CO₂CH₃)=CHOCH₃ | 6-[2-CN-C₆H₄-O]-pyrimidin-4-yl-O |
| -C(CO₂CH₃)=CHOCH₃ | 3-CF₃-C₆H₄-C(CH₃)=N-OCH₂ |
| -C(CO₂CH₃)-CHOCH₃ | CH₃O-N=C(4-Cl-C₆H₄)-C(CH₃)=N-OCH₂ |
| -C(CO₂CH₃)=NOCH₃ | 2-CH₃-C₆H₄-OCH₂ |
| -C(CO₂CH₃)=NOCH₃ | 2,5-(CH₃)2-C6H₃-OCH₂ |
| -C(CO₂CH₃)-NOCH₃ | 3-CF₃-C₆H₄-C(CH₃)=N-OCH₂ |
| -C(CONHCH₃)=NOCH₃ | 2-CH₃-C₆H₄-OCH₂ |
| -C(CONHCH₃)=NOCH₃ | 2,5-(CH₃)₂-C₆H₃-OCH₂ |
| -C(CONHCH₃)=NOCH₃ | 1-(4-Cl-C₆H₄)-pyrazol-3-yl-OCH₂ |
| -C(CONHCH₃)=NOCH₃ | 3-CF₃-C₆H₄-C(CH₃)=N-OCH₂ |
| -C(CONHCH₃)=NOCH₃ | CH₃O-N=C(4-Cl-C₆H₄)-C(CH₃)=N-OCH₂ |
| -N(OCH₃)-CO₂CH₃ | 2-CH₃-C₆H₄-OCH₂ |
| -N(OCH₃)-CO₂CH₃ | 2,5-(CH₃)₂-C₆H₄-OCH₂ |
| -N(OCH₃)-CO₂CH₃ | 1-(4-Cl-C₆H₄)-pyrazol-3-yl-OCH₂ |
| -N(OCH₃)-CO₂CH₃ | 3,5-Cl₂-C₆H₃-C(CH₃)=N-OCH₂ |

5. Mélange fongicide selon l'une des revendications 1 à 4, caractérisé par le fait que les proportions relatives en poids entre le composé I et le composé IIA ou IIB vont de 20 : 1 à 0,05 : 1.

6. Procédé pour combattre les mycètes nuisibles, caractérisé par le fait que l'on traite les mycètes nuisibles, leur habitat ou les végétaux, semences, sols, aires, matériaux ou locaux qu'on veut protéger contre les mycètes par un composé de formule I selon la revendication 1 et un composé de formule IIA ou IIB selon la revendication 1.

7. Procédé selon la revendication 6, caractérisé par le fait que l'on applique le composé I selon la revendication 1 et le composé IIA ou IIB selon la revendication 1 en même temps, ensemble ou séparément, ou successivement.

8. Procédé selon la revendication 6 ou 7, caractérisé par le fait que l'on applique le composé I de la revendication 1 en quantité de 0,05 à 1 kg/ha.

9. Procédé selon les revendications 6 à 8, caractérisé par le fait que l'on applique le composé IIA ou IIB selon la revendication 1 en quantité de 0,01 à 1 kg/ha.

10. Utilisation du composé I selon les revendications 1 à 3 pour la préparation d'un mélange à activité fongicide synergétique selon les revendications 1 à 4.
